# FASCICULE DE BREVET EUROPEEN

(11) **EP 1 573 228 B1**
(45) Date de publication et mention de la délivrance du brevet: **02.01.2008**
(21) Numéro de dépôt: 03782521.3
(22) Date de dépôt: 06.11.2003
(51) Int. Cl.: F16H 3/72, B60W 10/10

(54) **TRANSMISSION INFINIMENT VARIABLE A DERIVATION DE PUISSANCE, A VARIATEUR ELECTRIQUE**
STUFENLOSES GETRIEBE MIT LEISTUNGVERZWEIGUNG UND ELEKTRISCHEM VARIATOR
INFINITELY VARIABLE TRANSMISSION WITH POWER BRANCHING, WITH ELECTRIC SELECTOR

(30) Priorité: 08.11.2002 FR 0214040; 08.11.2002 FR 0214041; 14.11.2002 FR 0214241
(43) Date de publication de la demande: 14.09.2005
(73) Titulaire: RENAULT S.A.S., 92100 Boulogne Billancourt (FR)
(72) Inventeur: KEFTI-CHERIF, Ahmed, F-78990 Elancourt (FR); PICARD, Marc, F-92500 Rueil Malmaison (FR); BUANNEC, Michel, F-78480 Verneuil sur Seine (FR); CHANSON, Sébastien, F-92260 Fontenay aux Roses (FR)
(74) Mandataire: Rougemont, Bernard
(86) Numéro de dépôt international: PCT/FR2003/003317
(87) Numéro de publication internationale: WO 2004/044456

(56) Documents cités:
- EP-A- 1 097 830
- EP-A- 1 396 369
- DE-A- 19 606 771
- DE-A- 19 739 906
- DE-A- 19 909 424
- FR-A- 2 823 156
- US-A- 5 935 035
- US-B1- 6 491 599

## Description

La présente invention concerne une transmission à dérivation de puissance permettant d'obtenir une variation continue depuis un rapport de marche arrière jusqu'à un rapport de marche avant, en passant par une position particulière, dite "neutre en prise", où la vitesse de déplacement du véhicule est nulle, pour un régime quelconque du moteur thermique.

Plus précisément, elle a pour objet une transmission infiniment variable à dérivation de puissance, sur la base d'un variateur électrique et d'un train composé, et des moyens de commande répartissant différemment la puissance entre l'entrée et la sortie de la transmission selon le mode de fonctionnement de celle-ci.

Les transmissions à dérivation de puissance peuvent reposer sur trois principes, ou modes, de dérivation de puissance connus. Selon le premier mode, dit "à entrée couplée", la transmission comporte un couple de pignons de dérivation de puissance qui dérive la puissance à l'entrée du mécanisme, et un train épicycloïdal "assembleur", qui réunit les puissance en sortie de mécanisme. L'élément de contrôle est un variateur.

Dans les transmissions à dérivation de puissance dites "à sortie couplée", on a par exemple un train planétaire diviseur de puissance à l'entrée du mécanisme et un couple de pignons rassembleur de puissance en sortie de mécanisme, l'élément de contrôle étant toujours un variateur.

Enfin, dans les transmissions à dérivation de puissance dites "à deux points d'adaptation", un premier train épicycloïdal diviseur de puissance peut être placé en entrée de boîte, tandis qu'un second train épicycloïdal rassembleur de puissance est disposé en sortie de boîte, l'élément de contrôle étant toujours un variateur.

Les transmissions infiniment variables (Infinitely Variable Transmission ou I.V.T) classiques n'utilisent qu'un ou deux de ces trois principes de fonctionnement.

Par les publications US-5.558.589 et US-5.935.035, on connaît des transmissions infiniment variables à deux modes de fonctionnement regroupant au moins deux trains planétaires, deux embrayages de changement de mode, et un variateur électrique, en utilisant comme premier mode de fonctionnement, le principe de la dérivation de puissance à sortie couplée.

Selon ces publications, les moyens de changement de mode sont placés à l'extérieur des trains épicycloïdaux.

L'intérêt de disposer de deux modes de fonctionnement réside dans l'augmentation de la plage des rapports de la transmission et dans la possibilité de diminuer le dimensionnement du variateur électrique qui peut être composé sur la base de machines électriques.

Toutefois, dans ces architectures bi-modes connues, les changements de mode sont effectués par des embrayages multidisques disposés sur la sortie de la transmission et sont accompagnés pour cette raison d'à coups de couple ressentis désagréablement par les utilisateurs.

Un autre inconvénient des architectures décrites dans ces publications, réside dans leur complexité, liée notamment à la présence d'au moins deux embrayages et un frein.

Dans une précédente demande de brevet français FR 01 04690 (publiée sous FR-A-2 823 156) au nom du même demandeur, on a décrit une transmission infiniment variable à dérivation de puissance et à deux modes de fonctionnement, d'architecture plus simple que les transmissions habituelles du même type, utilisant des machines électriques de faible dimensionnement et dont les changements de mode ne sont accompagnés d'aucun à coup de couple. Dans cette demande de brevet FR 01 04690, qui montre une transmission comprenant les caractéristiques du préambule des revendications indépendantes 1, 11 et 21, les changements de mode sont effectués en intervenant sur des liaisons mécaniques internes de la transmission situées entre les deux trains. On dispose à cet effet deux étages de réduction entre les deux trains épicycloïdaux, ces étages étant respectivement sollicités dans le premier et dans le second mode de fonctionnement. Ces deux étages de réduction sont disposés en parallèle entre les trains sur la même voie de puissance.

L'application de ces enseignements de l'état de la technique pose le problème d'une transmission infiniment variable (I.V.T) qui soit compacte de façon à pouvoir être disposée facilement dans un groupe motopropulseur d'un véhicule.

Par ailleurs, une telle transmission infiniment variable est difficilement utilisable avec un moteur thermique produisant un fort couple et une puissance élevée et elle n'est pas facilement adaptable au type de moteur, qu'il soit à essence ou diesel.

Il ressort de l'état de la technique des difficultés de conception pour le circuit hydraulique d'actionnement qui ensuite pose de gros problèmes lors des réparations et de la maintenance de la boîte de vitesses, particulièrement dans le cas où le système de changement de mode est réalisé sous forme d'embrayage multidisques.

Dans le cas où le système de changement de mode comporte des crabots de boîte mécanique, on a des problèmes pour changer le système de changement de mode à l'intérieur de la boîte.

Enfin, l'adaptation d'une telle boîte de vitesses à un moteur thermique à essence pose également un problème lié aux vitesses de rotation qui sont très élevées, ce qui impose de fortes contraintes mécaniques sur certains éléments tournants.

En effet, avec un moteur à essence, les régimes moteurs sont plus élevés qu'avec un moteur diesel de sorte que certains éléments de la boîte de vitesses tournent très vite.

En particulier, on verra dans la suite de la description le problème que pose la rotation élevée d'une partie de vitesses.

La présente invention permet de porter remède à ces inconvénients de l'état de la technique.

Particulièrement, elle consiste à proposer un moyen permettant de laisser de la place pour le variateur électrique.

Le système de changement de mode peut être placé à la périphérie de la boîte de vitesses, de façon à pouvoir le commander plus facilement à l'aide d'actionneurs hydrauliques ou d'actionneurs électromécaniques.

Enfin, la structure de transmission retenue permet de réduire les vitesses de roulement de la boîte.

A cet effet, selon la revendication indépendante 1, la présente invention concerne une transmission infiniment variable à dérivation de puissance, qui comporte une voie principale de puissance composée par deux trains épicycloïdaux connectés par un train composé à deux connexions.

Grâce à une telle structure, il a été ainsi possible de remplacer les deux réducteurs et le train simple de l'état de la technique par un ensemble composé de deux réducteurs et d'un train composé.

Selon la revendication indépendante 11, la présente invention concerne aussi une transmission infiniment variable à dérivation de puissance à deux modes de fonctionnement, dont les éléments constitutifs sont répartis entre deux voies de puissance reliant en parallèle le moteur thermique aux roues du véhicule, ces moyens incluant deux trains épicycloïdaux, deux machines électriques, un étage de réduction, et des moyens de commande répartissant différemment la puissance entre les deux voies de puissance selon le mode de fonctionnement de celle-ci. Cette transmission infiniment variable comporte un troisième train épicycloïdal en série avec l'un des deux trains épicycloïdaux sur l'une des deux voies de puissance, ledit troisième train épicycloïdal coopérant avec lesdits moyens de commande de sorte que, dans un premier mode de fonctionnement, tous les éléments du troisième train tournent à la même vitesse.

Selon la revendication indépendante 21, l'invention propose également que la transmission infiniment variable comporte un premier train composé qui permet de connecter le moteur thermique aux roues du véhicule selon une voie principale de dérivation de puissance, et un train simple qui permet de réaliser la dérivation de puissance ainsi qu'un train composé de façon à réaliser un système de changement de mode entre au moins deux modes de fonctionnement de la transmission infiniment variable.

D'autres caractéristiques et avantages de la présente invention seront mieux compris à l'aide de la description et des figures annexées parmi lesquelles :
- la figure 1 et la figure 2 sont des schémas décrivant l'état de la technique sur lequel se fonde la présente invention ;
- les figures 3 et 4 sont respectivement un schéma de principe et un schéma de réalisation mécanique de la transmission infiniment variable de l'invention ;
- les figures 5 et 6 représentent respectivement un schéma de principe et un schéma cinématique d'un mode de réalisation préféré de la présente invention ;
- la figure 7 est un autre schéma de principe de la présente invention ;
- la figure 8 est un schéma cinématique d'un mode de réalisation mécanique de l'invention représenté à la figure 7.

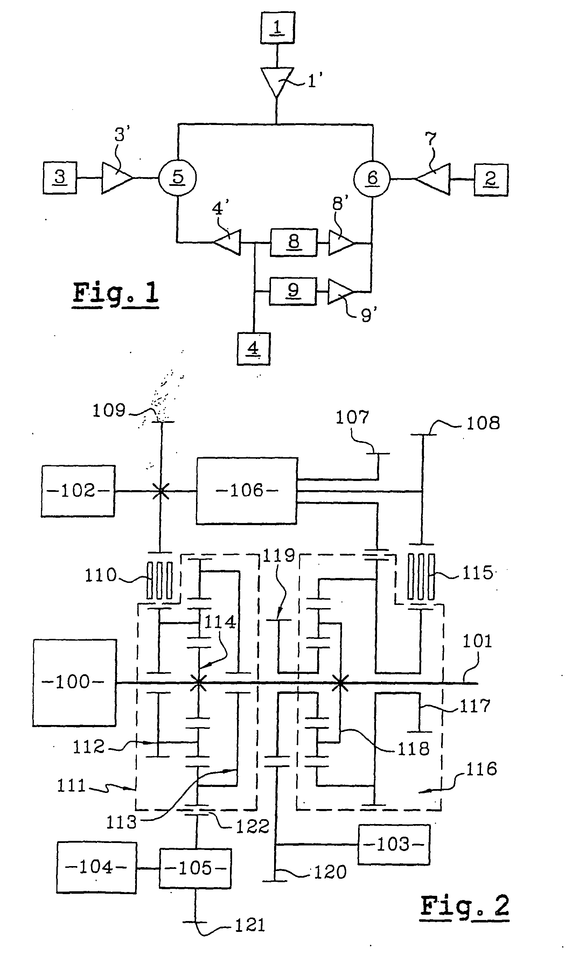

A la figure 1, on a représenté le schéma de principe de la transmission infiniment variable de la demande FR 01.04690.

La transmission de la figure 1 est composée de deux trains épicycloïdaux 5, 6, de six étages de réduction 7,1',3',4',8',9', de deux systèmes de changement de mode 8 et 9, qui peuvent être, soit des crabots, soit des embrayages multidisques, et de deux machines électriques 2, 4, constituant ensemble un variateur.

Cette transmission dispose de quatre connexions d'entrée et de sortie, qui peuvent être respectivement reliées au moteur thermique 1, aux roues 3 et aux deux machines électriques 2 et 4.

Le moteur thermique 1 est connecté à un étage de réduction 1'. Les roues 3 sont connectées à un étage de réduction 3'. Une première machine électrique 2 du variateur est reliée à un étage de réduction 7 et une seconde machine électrique 4 est reliée à un étage de réduction 4' et aux deux systèmes de changement de mode 8 et 9.

Trois étages de réduction sont connectés au premier train épicycloïdal 5. Quatre étages de réduction sont connectés au deuxième train épicycloïdal 6. Un étage de réduction 8' ou 9' est relié à chaque système de changement de mode 8 et 9.

La transmission illustrée par la figure 1 comporte donc six étages de réduction dont quatre sont disposés entre les deux trains épicycloïdaux et dont deux sont disposés à l'extérieur de ces derniers.

Le moteur thermique 1 est connecté au train épicycloïdal 5 par l'intermédiaire d'un étage de réduction 1' et les roues 3 sont connectées au train épicycloïdal 5 par l'intermédiaire d'un étage de réduction 3'.

Cette transmission dispose de deux modes de fonctionnement à deux points d'adaptation. Dans le premier mode, le premier système de changement de mode 8, relié aux étages de réduction, d'une part, et à une machine électrique 4, d'autre part, est ouvert. Cette première branche est donc libre, tandis que la seconde, comportant le second système de changement de mode 9, relié comme le premier à deux étages de réduction et à la machine électrique 4, est fermée.

A la figure 2, on a représenté un mode de réalisation mécanique pratique du schéma de principe de la figure 1.

A la figure 2, le moteur thermique 100 est connecté à un arbre central 101 qui traverse tout le mécanisme de la boîte de vitesses dont les pignons et de ses trains épicycloïdaux ont été représentés schématiquement.

Le variateur électrique est essentiellement composé d'une première machine électrique 102 et d'une seconde machine électrique 103.

Les machines électriques 102 et 103 peuvent fonctionner indifféremment comme moteur ou comme générateur et sont préférentiellement connectées à un élément de stockage de l'énergie électrique comme une batterie et/ou une capacité de forte valeur.

Enfin, la boîte de vitesses est connectée par l'intermédiaire d'un différentiel 105 aux roues 104 du véhicule.

La boîte de vitesses ou transmission infiniment variable de l'invention comporte essentiellement un premier train épicycloïdal 111 et un second train épicycloïdal 116.

Elle comporte aussi un système de changement de mode 106.

Le porte satellite 112 est monté libre en rotation par un palier convenable autour de l'arbre central traversant 101.Les satellites du porte satellite 112 sont disposés de façon à être couplés, d'une part, au planétaire 114 solidaire de l'arbre 101 et, d'autre part, à la couronne 113 qui tourne librement autour d'un palier disposé sur l'arbre traversant 101.

Le porte satellite 112 du premier train épicycloïdal 111 est entraîné par une denture extérieure par l'intermédiaire d'une chaîne 110 reliée à un pignon 109 solidaire de l'arbre de sortie de la première machine électrique 102 du variateur électrique.

La couronne 113 du premier train épicycloïdal présente une denture extérieure 122 qui est engrenée sur un pignon 121 d'attaque du différentiel 105 connecté aux roues 104.

Le couplage de la denture 122 et du pignon 121 réalise un réducteur 3'.

Le second train épicycloïdal 116 comporte une couronne 117 dont une première denture est couplée par une chaîne 115 à un pignon 108 entraîné par le système de changement de mode 106.

Le planétaire 119 du second train épicycloïdal 116 comporte une denture intérieure et une denture extérieure.

La denture intérieure du planétaire 119 est couplée aux satellites du porte satellite 118 tandis que la denture extérieure du planétaire 119 est couplée à un pignon 120 d'attaque de la seconde machine électrique 103 du variateur électrique de la transmission infiniment variable.

La couronne 117 présente aussi une denture extérieure qui est couplée à un autre pignon 107 commandé par le système de changement de mode 106, de sorte que l'arbre de sortie de la première machine électrique 102 puisse être couplé sélectivement ou bien au pignon 107 ou bien au pignon 108. Le système de changement de mode 106 est réalisé :
- ou bien à l'aide de crabots activés par un système d'entraînement convenable ;
- ou par deux embrayages activés par des actionneurs convenables.

Ce changement de mode permet d'introduire deux rapports de réduction différents K5 et K6 selon que le système de changement de mode active le pignon 108 ou le pignon 107 et aussi de réaliser deux chemins ou voies de puissance différentes pour réaliser une transmission infiniment variable bi-mode.

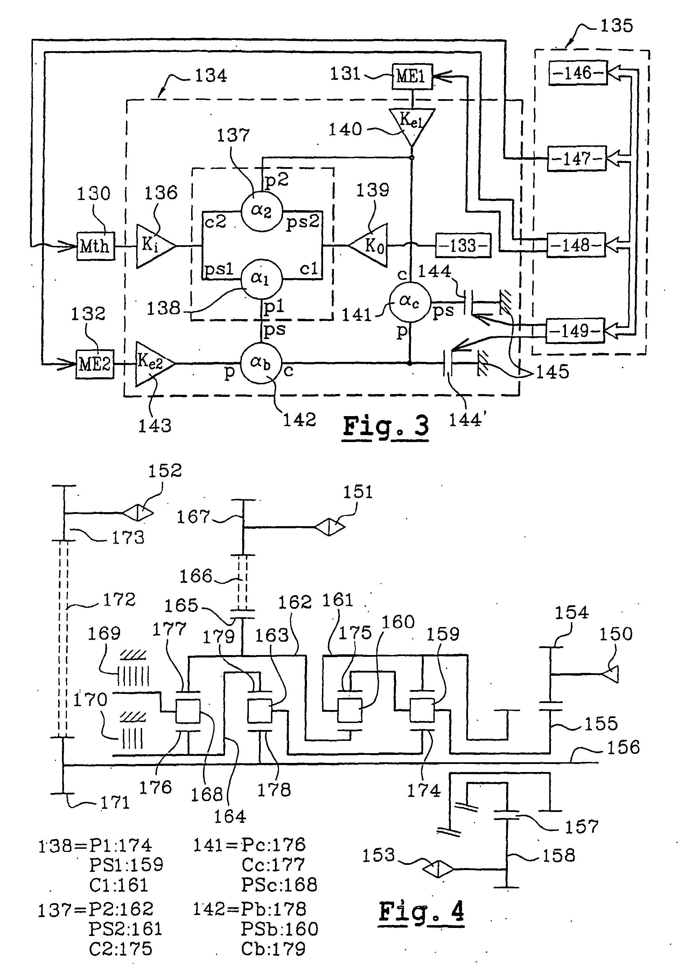

A la figure 3, on a représenté le schéma de principe de la présente invention.

La transmission infiniment variable de la présente invention comporte une voie principale de puissance et une voie secondaire de dérivation de puissance.

Dans le but de réaliser une telle structure, le moteur thermique 130 est connecté par l'intermédiaire d'un réducteur 136 à la couronne C2 et au porte satellite ps1 respectivement d'un premier train épicycloïdal 137 et d'un second train épicycloïdal 138 de la boîte de vitesses 134 proprement dite.

Les roues du véhicule 133 sont connectées à la boîte de vitesse 134 par l'intermédiaire d'un réducteur 139 de raison K₀ dont un accès est couplé respectivement au porte satellite ps2 et à la couronne C1 du premier train épicycloïdal 137 et du second train épicycloïdal 138.

L'ensemble des premier 137 et second 138 trains épicycloïdaux constituent un train épicycloïdal composé.

Le chemin de puissance reliant le moteur thermique 130 aux roues 133 du véhicule ainsi formé constitue le chemin principal.

Afin de réaliser la variation continue du rapport de transmission dans le mode choisi entre deux modes de fonctionnement tel qu'il a été décrit précédemment, la transmission infiniment variable de l'invention comporte un variateur électrique composé d'une première machine électrique 131 et d'une seconde machine 132.

Ainsi qu'il a été déjà décrit, le variateur électrique est aussi complété par un élément de stockage d'énergie électrique (non représenté) auquel sont connectées les deux machines électriques 131 et 132 qui sont réversibles électriquement et mécaniquement.

La première machine électrique 131 est connectée à un réducteur 140 qui introduit un rapport de réduction Kₑ₁, et est respectivement couplée au planétaire p2 du premier train épicycloïdal 137 et à la couronne C d'un troisième train épicycloïdal 141.

Le troisième train épicycloïdal 141 comporte un planétaire p qui est couplé à la couronne C d'un quatrième train épicycloïdal 142 de sorte que le planétaire p du troisième train épicycloïdal 141 et la couronne C du quatrième train épicycloïdal 142 sont connectés au bâti ou à tout autre point fixe 145 par l'intermédiaire d'un frein 144'.

Le porte satellite du troisième train épicycloïdal 141 est lui-même couplé à un tel point fixe 145 par le moyen d'un frein 144.

Le quatrième train épicycloïdal 142 comporte un planétaire p qui est couplé par l'intermédiaire d'un réducteur 143, de raison Kₑ₂, à la seconde machine électrique 132 du variateur électrique de la transmission de l'invention.

Afin de contrôler la transmission infiniment variable de l'invention, le moteur thermique, le variateur électrique 131, 132, et les deux freins 144 et 144' de la boîte de vitesses 134 proprement dite sont commandés par l'intermédiaire d'un contrôleur 135 de transmission infiniment variable bi-mode.

Le contrôleur 135 comporte un contrôleur 146 du point de fonctionnement du groupe motopropulseur en fonction de contraintes prédéterminées. Ces contraintes dépendent particulièrement de l'état de l'environnement du véhicule, notamment de sa vitesse et du point de fonctionnement précédemment commandé, et de la commande du conducteur, comme le degré d'enfoncement de la pédale d'accélérateur, ou encore de la commande d'un automate de réglage de la vitesse du véhicule par exemple.

Un contrôleur 147 du point de fonctionnement du moteur thermique 130 reçoit une consigne de point de fonctionnement du contrôleur 145 et produit des signaux de commande convenant à des actionneurs de détermination du point de fonctionnement du moteur thermique 130. Un tel actionneur est dans un mode de réalisation réalisé par le volet du carburateur.

Un contrôleur 148 du fonctionnement des première 130 et seconde 131 machines électriques permet de déterminer pour chaque machine son mode de fonctionnement moteur ou génératrice. Le contrôleur détermine selon ce mode de fonctionnement déterminé pour chaque machine sa vitesse de rotation et/ou son couple ou encore sa tension d'induit et/ou son courant d'induit. Dans un mode de réalisation préférée, les deux machines électriques réversibles sont chargées électriquement à l'aide d'un accumulateur d'énergie électrique qui coopère avec un organe de gestion d'un accumulateur d'énergie électrique. Le contrôleur 148 reçoit une consigne de point de fonctionnement du contrôleur 135 et produit des signaux de commande à des circuits de pilotage des machines électriques convenant. De tels circuits de pilotage permettent de réguler l'alimentation de l'induit du moteur ou encore d'orienter l'énergie électrique produite en mode de fonctionnement de générateur.

Un contrôleur 149 de changement de mode de transmission détermine l'état ouvert ou fermé du premier frein 144 et/ou du second frein 144' de sorte qu'un mode parmi au moins deux modes de fonctionnement de la transmission infiniment variable soit sélectionné sous la commande du contrôleur 135, ainsi qu'il a été décrit plus haut.

A la figure 4, on a représenté un mode de réalisation mécanique du schéma de principe de la boîte de vitesses 134 de la figure 3. Cette figure est sensiblement une demie vue symétrique par rapport à son axe de révolution 156.

Le moteur thermique 150 est connecté à un pignon 154 de façon à réaliser avec une denture 155 un réducteur analogue au réducteur 136 de la figure 3.

La denture 155 est montée sur un palier libre en rotation autour d'un arbre central 156 de boîte de vitesses.

La denture 155 est solidaire du porte satellite 159 (PS1, figure 3) du second train épicycloïdal qui constitue ainsi le premier train du train composé de la voie de puissance principale de l'invention.

Le second train épicycloïdal comporte un planétaire 174 (P1 à la figure 3), et une couronne 161 (C1 à la figure 3).

Le premier train épicycloïdal 137 à la figure 3 comporte un planétaire 162 (P2 à la figure 3), un porte satellite (PS2 à la figure 3) et une couronne 175 (C2 à la figure 3).

Le porte satellite 159 du second train épicycloïdal 138 est solidaire de la couronne 175 du premier train épicycloïdal 137.

La couronne 161 du second train épicycloïdal 138 est connectée ou solidaire du porte satellite 161.

On a ainsi réalisé un train composé compact qui est disposé coaxialement autour d'un arbre central de boîte de vitesses 156.

A la figure 4, seule la partie supérieure de cette vue schématique a été représentée pour simplifier la clarté de l'exposé.

Les roues du véhicule sont couplées sur un arbre 153 par un pignon 158 à la denture 157 solidaire de la couronne 161 du second train épicycloïdal 138.

La denture 157 est représentée comme un pignon de sortie de boîte de vitesses.

La voie principale de puissance permet ainsi à l'aide du train composé décrit ci-dessus de relier les roues 153 au moteur thermique 150.

On a représenté ensuite les troisième 141 et quatrième 142 trains épicycloïdaux qui permettent de réaliser la voie secondaire de puissance ainsi que son couplage tant au variateur, qu'au système de changement de mode qu'à la voie principale de puissance.

Le troisième train épicycloïdal de la boîte de vitesse de la l'invention comporte un planétaire 176 (P à la figure 3) et une couronne 177 (C à la figure 3).

Le porte satellite 168 du troisième train épicycloïdal 141 est solidaire du frein 169 analogue au frein 144 de la figure 3.

Le quatrième train épicycloïdal 142 est ici implémenté avec un porte satellite 163 qui connecte le planétaire 178 à la couronne 179.

Pour réaliser les dérivations de puissance et les manipulations par le système de changement de mode, le planétaire 176 du troisième train épicycloïdal 141 est solidaire de la couronne 179 du quatrième train épicycloïdal 142.

De même, la couronne 177 du troisième train épicycloïdal 141 est solidaire du planétaire 162 du premier train épicycloïdal (137).

Le planétaire 176 du troisième train épicycloïdal 141 ainsi que la couronne 179 du quatrième train épicycloïdal sont solidarisés à une première garniture d'un frein 170 analogue au frein 144' de la figure 3, l'autre garniture du frein 170 étant solidaire du carter de la boîte de vitesses. Un actionneur de frein (non représenté) permet d'activer ou non le freinage en rapprochant les deux garnitures sous la commande du contrôleur de mode de fonctionnement de la transmission (135, 149). Le porte satellite 168 du troisième train épicycloïdal (p, 141) est solidaire d'une première garniture d'un frein 169 dont l'autre garniture du frein 169 étant solidaire du carter de boîte de vitesses. Un actionneur de frein (non représenté), associé au frein 169 du porte satellite 168, permet d'activer ou non son freinage en rapprochant les deux garnitures sous la commande du contrôleur de modes de fonctionnement de la transmission (135, 149).

L'arbre 156 de boîte de vitesses 134 est terminé à son autre extrémité par rapport au moteur thermique 150 par un pignon 171 qui est connecté à la seconde machine électrique 152 par l'intermédiaire d'un pignon 171 relié au pignon 173 par l'intermédiaire d'une chaîne 172.

Le pignon 173 entraîne l'arbre du rotor de la machine électrique 152.

De même, le planétaire 162 du premier train épicycloïdal 137 (figure 3) du train composé porte une denture extérieure 165 qui est couplée par l'intermédiaire d'une chaîne 166 à un pignon 167 solidaire de l'arbre du rotor de la première machine électrique 151 du variateur électrique de la transmission infiniment variable de l'invention.

On a ainsi réalisé mécaniquement une boîte de vitesse à laquelle peuvent être facilement intégrées extérieurement les première et seconde machines électriques et dans laquelle le système de changement de mode est constitué essentiellement par les deux freins 169 et 170.

Les deux machines électriques 151, 152 du variateur électrique et les deux freins 169, 170 du système de changement de modes sont intégrables.

Par ailleurs les éléments ayant la vitesse de rotation la plus forte ont été disposés avec de forts rapports de démultiplication, ce qui permet de baisser les valeurs maximales admissibles sur la boîtes de vitesses.

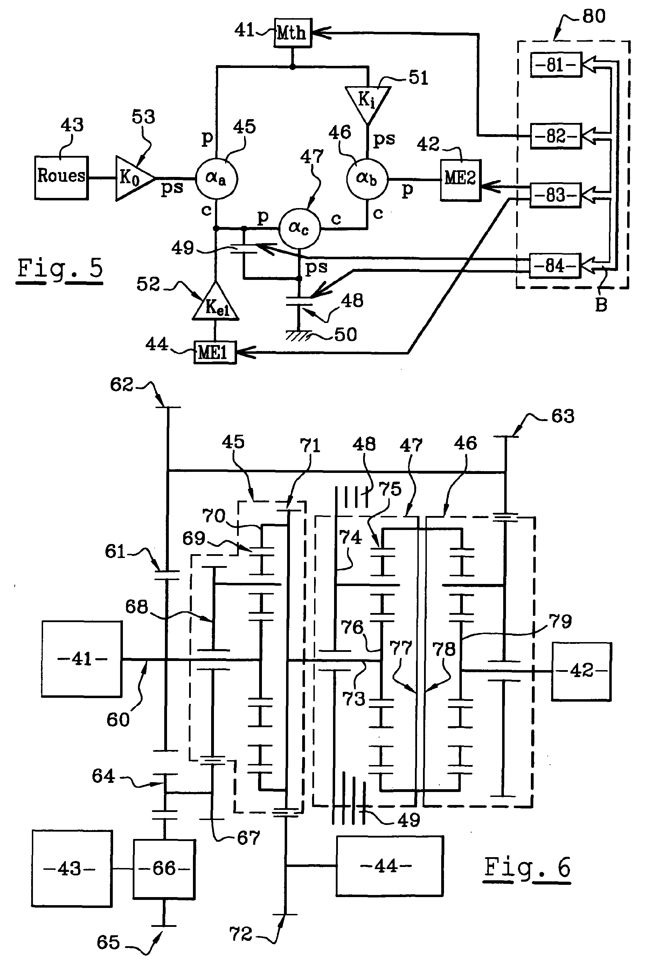

A la figure 5, le moteur thermique 41 peut dériver de la puissance mécanique par une première voie de puissance constituée par un premier train épicycloïdal 45 auquel il est connecté par le planétaire (accès référencé p).

Le porte satellite ps du train épicycloïdal 45 est connecté aux roues 43 du véhicule par l'intermédiaire d'un réducteur 53 appliquant un coefficient de réduction K₀ sur la vitesse de rotation.

Par ailleurs, le moteur thermique 41 peut transférer de la puissance mécanique notamment vers les roues motrices 43 du véhicule, mais aussi vers des première et seconde machines électriques 42 et 44, par une seconde voie de puissance qui comporte un réducteur 51 de coefficient de réduction Kᵢ dont la sortie est connectée au porte satellite ps du second train épicycloïdal 46.

Le planétaire p du second train épicycloïdal 46 est connecté au rotor de la seconde machine électrique 42.

Selon l'invention, dans cette seconde voie de puissance, un troisième train épicycloïdal 47 est inséré en série avec le second train épicycloïdal 46 par sa couronne c qui est connectée à la couronne c du second train épicycloïdal 46.

De façon à regrouper les deux voies de puissance, la couronne c du premier train épicycloïdal 45 et le planétaire p du troisième train épicycloïdal 47 sont réunis et connectés aussi à un réducteur 52 de rapport de vitesse Ke₁ et qui est connecté à l'autre machine électrique 44.

Selon l'invention, le dispositif ou système de changement de mode comporte essentiellement un frein 48 et un embrayage 49, le frein 48 est disposé entre le porte satellite ps du troisième train épicycloïdal 47 et le carter 50 de la transmission infiniment variable, l'embrayage 49 est disposé entre le porte satellite ps du troisième train épicycloïdal 47 et le point commun à la couronne c du premier train épicycloïdal 45 et au planétaire p du troisième train épicycloïdal 47.

Dans cette architecture, la transmission infiniment variable de l'invention possède deux modes de fonctionnement qui sont :
- un premier mode réalisé quand le frein est fermé,
- un second mode réalisé quand l'embrayage est fermé.

Grâce au schéma fonctionnel de la présente invention, l'adaptation de la transmission infiniment variable à différents moteurs de même puissance, et possédant des régimes maximums de rotations différents, peut s'effectuer en adaptant uniquement le réducteur 51 unique en choisissant un rapport Kᵢ convenable.

Quand l'embrayage 49 est fermé, le planétaire p et le porte satellite ps du troisième train épicycloïdal 47 étant bloqués ou plutôt reliés ensemble, le train 47 tourne en bloc. Tous les éléments du troisième train épicycloïdal 47, comportant le planétaire p, la couronne c et le porte-satellites ps, tournent à la même vitesse. Le troisième train épicycloïdal 47 n'introduit alors aucun rapport de démultiplication de vitesse.

Quand le frein 48 est serré, l'élément du troisième train épicycloïdal sur lequel il est appliqué, ici le porte satellite, le train prend appui sur le carter 50 et introduit un rapport de démultiplication.

Cette disposition permet aussi de serrer temporairement les deux coupleurs 48 et 49 lors des changements de mode.

De la sorte, il est possible de réaliser un système de changement de mode sans interruption du passage du couple.

Quand le frein 48 est serré, le troisième train épicycloïdal 47 réalise une démultiplication égale à sa raison, c'est-à-dire au rapport du nombre de dents de la couronne c au nombre de dents du planétaire p.

Dans le second mode où l'embrayage 49 est fermé, le troisième train 47 n'entraîne aucune démultiplication.

La transmission infiniment variable de l'invention comporte un contrôleur 80 de son fonctionnement qui est connecté par un bus B à plusieurs contrôleurs ou circuits de commande qui le compose.

Le contrôleur 80 comporte un contrôleur 81 du point de fonctionnement du groupe motopropulseur en fonction de contraintes prédéterminées. Ces contraintes dépendent particulièrement de l'état de l'environnement du véhicule, notamment de sa vitesse et du point de fonctionnement précédemment commandé, et de la commande du conducteur, comme le degré d'enfoncement de la pédale d'accélérateur, ou encore de la commande d'un automate de réglage de la vitesse du véhicule par exemple.

Un contrôleur 82 du point de fonctionnement du moteur thermique 41 reçoit une consigne de point de fonctionnement du contrôleur 81 et produit des signaux de commande convenable à des actionneurs de détermination du point de fonctionnement du moteur thermique 41. Un tel actionneur est dans un mode de réalisation réalisé par le volet du carburateur.

Un contrôleur 83 du fonctionnement des première 44 et seconde 42 machines électriques permet de déterminer pour chaque machine son mode de fonctionnement moteur ou génératrice. Le contrôleur détermine selon ce mode de fonctionnement déterminé pour chaque machine sa vitesse de rotation et/ou son couple ou encore sa tension d'induit et/ou son courant d'induit. Dans un mode de réalisation préférée, les deux machines électriques réversibles sont chargées électriquement à l'aide d'un accumulateur d'énergie électrique qui coopère avec un organe de gestion d'un accumulateur d'énergie électrique. Le contrôleur 83 reçoit une consigne de point de fonctionnement du contrôleur 81 et produit des signaux de commande convenable à des circuits de pilotage des machines électriques. De tels circuits de pilotage permettent de réguler l'alimentation de l'induit du moteur ou encore d'orienter l'énergie électrique produite en mode de fonctionnement de générateur.

Un contrôleur 84 de changement de mode de transmission détermine l'état ouvert ou fermé de l'embrayage 49 et/ou du frein 48 de sorte qu'un mode parmi au moins deux modes de fonctionnement de la transmission infiniment variable soit sélectionné sous la commande du contrôleur 81, ainsi qu'il a été décrit plus haut.

A la figure 6, on a représenté le schéma cinématique d'un mode de réalisation de l'invention, représenté à la figure 5.

Les mêmes éléments que ceux de la figure 5 portent les mêmes numéros de référence.

Les deux machines électriques 42 et 44 ne sont pas disposés sur la même ligne que le moteur thermique 41, et elles peuvent être disposées selon l'arbre moteur vue de face avec un décalage angulaire déterminé selon les plans encombrement à la fois de la transmission IVT, du groupe motopropulseur qu'elle équipe et de l'encombrement du comportement moteur du véhicule.

De plus, on remarque qu'il a été possible d'insérer le troisième train épicycloïdal 47 entre les premier 45 et second 46 trains épicycloïdaux de l'architecture de l'état de la technique sans obliger à un allongement particulier de la transmission infiniment variable.

L'arbre de sortie 60 du moteur thermique 41 est solidaire d'une roue 61 engrenée sur un train constitué d'une roue 62 montée sur un axe avec une roue 63.

Le rapport du nombre de dents des roues 61 et 62 peut être adapté de façon à produire un réducteur équivalent au réducteur du schéma de la figure 5 variable en fonction des adaptations des vitesses de façon à faire fonctionner la transmission infiniment variable de l'invention dans son domaine optimal en régime maximum.

L'arbre 60 de sortie du moteur thermique 41 est connecté en bout d'arbre au planétaire du premier train épicycloïdal 45, le porte satellite 68 tourne librement autour de l'arbre moteur 60, les satellites 69 sont engrenés entre la couronne 70 et le planétaire.

La couronne 70 du premier train épicycloïdal 45 comporte une denture extérieure couplée à un pignon 72 solidaire de l'arbre du rotor de la première machine électrique 44.

Le rapport de réduction entre le nombre de dents des roues 72 et 71 permet de synthétiser le rapport de réduction Kₑ₁ du réducteur 52 du schéma de la figure 5.

Par ailleurs, le porte satellite 68 du premier train épicycloïdal 45 comporte une denture extérieure engrenée sur une première roue 67 solidaire axialement d'une seconde roue 64 qui est couplée au pignon d'entrée 65 du différentiel 66 connecté aux roues 43.

On compose aussi un réducteur de raison K₀ analogue au réducteur 53 (voir figure 5)

La couronne 70, 71 du premier train épicycloïdal 45 est solidaire du planétaire 76 du troisième train épicycloïdal 47 par l'intermédiaire d'un arbre 73 qui traverse le porte satellite 74 du troisième train épicycloïdal 47.

Le porte satellite 74 du troisième train épicycloïdal 47 présente une garniture schématiquement représentée en 48 qui peut être activée par le frein 48.

La machine électrique 42 présente un arbre de sortie qui est connecté au planétaire 79 du second train épicycloïdal 46 dont le porte satellite est engrené sur la couronne 78 solidaire de la couronne 77 du troisième train épicycloïdal 47.

A l'inverse, dans le deuxième mode de fonctionnement, la première branche est fermée et la seconde branche est ouverte.

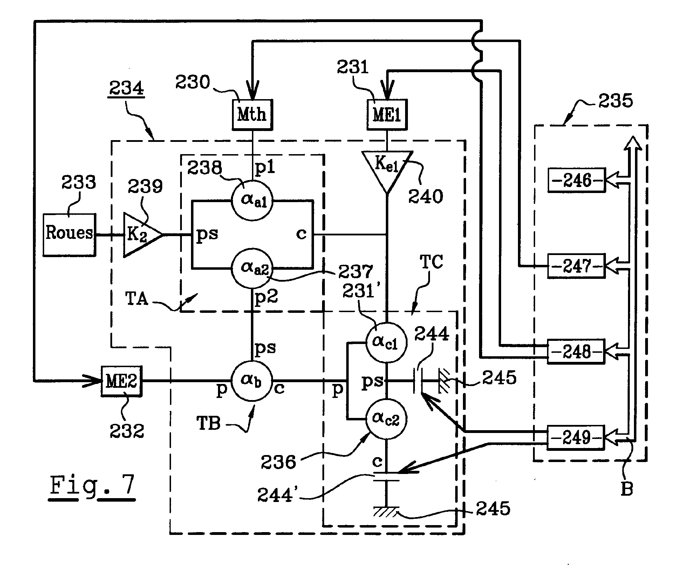

A la figure 7, on a représenté un autre schéma de principe d'une transmission infiniment variable implémentant l'invention.

Le moteur thermique 230 présente un arbre de sortie qui est connecté à un premier train composé TA implémenté dans la boîte de vitesses 234 ou de transmission infiniment variable proprement dit.

Le premier train composé TA comporte un premier train épicycloïdal 238 auquel le moteur thermique 230 est connecté par son planétaire P1.

Le porte satellite ps du premier train épicycloïdal 238 du train composé TA est connecté à un réducteur 239 et applique un rapport de réduction déterminée K₂ et dont la sortie est connectée aux routes motrices 233 du véhicule.

Par ailleurs, le porte satellite ps du premier train épicycloïdal 238 est connecté au porte satellite d'un second train épicycloïdal 237 du premier train composé TA.

Les couronnes des premier 238 et second 237 trains épicycloïdaux sont connectées ensemble et leur mouvement commun est transmis à un couplage sur la voie secondaire de dérivation de puissance.

Le planétaire P2 du second train épicycloïdal 237 est lui-même connecté au porte satellite ps d'un train épicycloïdal TB dont le planétaire p est connecté à l'arbre de rotation d'une seconde machine électrique 232.

Une première machine électrique 231 est couplée par son arbre de sortie à un réducteur 240 qui applique un rapport de réduction K_{E1} et est connecté à la fois aux couronnes des premier 238 et second 237 trains épicycloïdaux, ainsi qu'à la couronne d'un premier train épicycloïdal d'un second train composé TC.

Le second train composé TC comporte aussi un second train épicycloïdal 236 configuré de sorte que les portes satellites et les planétaires de ses deux trains épicycloïdaux 231' et 236 sont couplés les uns aux autres.

Les portes satellites PS sont solidaires temporairement d'un bâti ou châssis 245 par l'intermédiaire d'un premier frein 244 tandis que la couronne du second train épicycloïdal 236 peut être solidarisé du châssis ou point fixe 245 par l'intermédiaire d'un second frein 244'.

Les planétaires des trains épicycloïdaux 231' et 236 du train composé TC sont connectés à la couronne du train épicycloïdal TB.

La boîte de vitesses 234 est contrôlée à l'aide d'un contrôleur 235 qui comporte essentiellement un calculateur de transmission 246, un contrôleur du moteur thermique 247, un contrôleur 248 du variateur électrique et un contrôleur 249 de changement de modes.

Ces divers composants du contrôleur 235 sont reliés à différents capteurs de l'état de fonctionnement du véhicule ainsi que des capteurs de détection de l'intention du conducteur comme un capteur de degré d'enfoncement de la pédale d'accélération. Ce capteur est alors connecté à un module de détection de l'intention ou de la volonté du conducteur. La liaison est assurée par l'intermédiaire d'un système de bus B.

Le contrôleur de changement de modes 249 comporte une première sortie qui est transmise à un actionneur du frein 244 et une seconde sortie qui est couplée à un actionneur du second frein 244'.

Un tel contrôleur de changement de modes, en fonctions des commandes 246, produit des signaux de sortie capables de prendre quatre états dans lesquels : un premier état où les deux signaux de sortie sont inactifs, un second ou un troisième état où l'un ou l'autre des signaux de sortie est actifs, ou un quatrième état où les deux signaux de sortie sont actifs.

Le contrôleur 248 du variateur électrique produit au moins deux signaux de commande et/ou de contrôle à destination de chacune des machines électriques 231 et 232 pour déterminer leurs points de fonctionnement respectifs selon une loi courant-tension I, à quatre quadrants.

Préférentiellement, le variateur électrique est complété par un élément de stockage d'énergie électrique (non représenté) comme la batterie du véhicule ou une forte capacité, qui est géré par un circuit de charge et de décharge (non représenté) sous le contrôle du contrôleur 249.

Un tel système de changement de modes composé d'un train composé TC et des deux freins 244, 244', permet de simplifier la réalisation mécanique du changement de modes sans imposer d'arbre supplémentaire et facilite l'implantation des machines électriques sur la boîte de vitesses 234.

Les premier 244 et second 244' freins peuvent être placés en bout de boîte 234 alors que les embrayages de l'état de la technique quand ils sont utilisés pour réaliser le système de changement de modes doivent être obligatoirement au coeur de cette boîte.

Le train composé TA offre plus de possibilités de démultiplication et en particulier une démultiplication spécifique qui permet de réduire la vitesse de rotation des éléments du second train composé TC ou train de dérivation.

Une telle architecture autorise trois états de fonctionnement selon que les freins sont ouverts ou serrés.

Dans le premier mode de fonctionnement, le frein 244 bloque le porte satellite PS des deux trains épicycloïdaux 231' et 236.

La couronne C du second train épicycloïdal 236 tourne librement et le train TC fonctionne comme un train simple composé de la couronne du premier train épicycloïdal 231' du porte satellite commun PS et du planétaire commun P.

Dans un second état, le système de changement de mode est placé de sorte que les deux freins 244 et 244' sont tous les deux serrés.

De ce fait, tous les éléments du train composé TC sont bloqués et il est donc immobilisé.

Dans ce second mode, les deux machines électriques 231 et 232 se trouvent directement connectées à la voie principale de dérivation de puissance et peuvent aussi bien fonctionner en génératrice qu'en moteur l'une ou l'autre ou l'une et l'autre.

Cette disposition se fait sans blocage ni casse mécanique de la transmission lors d'un changement de mode.

Dans un troisième mode, le premier frein 244 est ouvert et le deuxième frein 244' est serré.

Dans cette disposition, la couronne C du second train épicycloïdal 236 est freinée et sert de point d'appui.

Dans ce mode, le rapport de démultiplication est un rapport composite fonction du nombre de dents de tous les éléments tournants comprenant la couronne C, le porte satellite PS et le planétaire C du train composé TC.

Dans cette disposition, la transmission bénéficie d'une très grande plage de rapports de démultiplication réalisables.

Dans ce schéma de principe, le moteur thermique est directement relié sans réduction à l'une des entrées du train composé TA de la voie principale.

Les trains épicycloïdaux sont donc tous sur la même ligne, ce qui rend la transmission particulièrement adaptée aux architectures de groupe motopropulseur longitudinales avec forte motorisation.

Par ailleurs, le train double de la voie secondaire, composé du train simple TB et du train composé TC, permet d'obtenir une large plage de démultiplication.

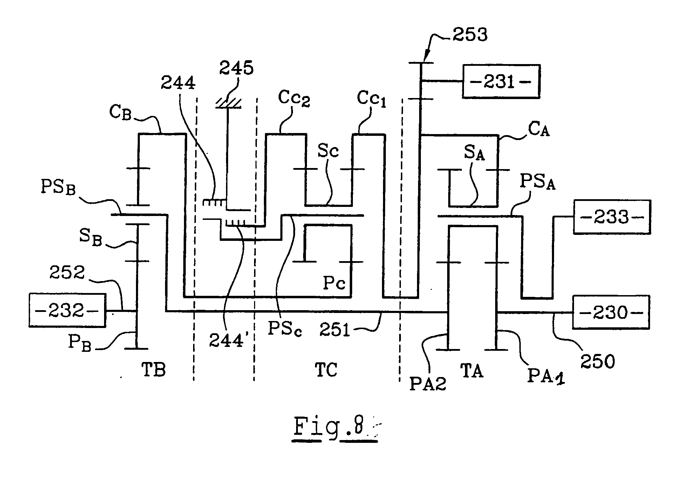

A la figure 8, on a représenté un schéma d'implantation mécanique d'une boîte de vitesses reprenant la disposition de principe de la boîte 234 de la figure 7.

Dans cette figure 8, les mêmes éléments que ceux de la figure 7 portent les mêmes numéros de référence et ne sont pas plus décrits.

L'arbre 250 de sortie du moteur thermique 230 est aligné avec l'arbre commun de rotation 251 du train composé principal TA, du train composé de changement de modes TC, ainsi que du train simple TB de composition des deux voies de dérivation.

Le moteur thermique 230 est donc directement connecté sans réducteur intermédiaire par cet arbre 250 au planétaire PA₁ du premier train épicycloïdal 238 (figure 7).

Le porte satellite PS_{A} est double et commun aux deux trains épicycloïdaux 237, 238 du premier train composé TA. Le porte satellite PS_{A} est tournant sur le planétaire PA₁ du train épicycloïdal 238 (figure 7) fixé en bout d'arbre 250 du moteur thermique 230, et il est tournant sur le planétaire PA₂ du second train épicycloïdal 237 (figure 7) du train composé TA, fixé à une première partie de l'arbre 251.

La seconde partie de l'arbre 251 porte le porte satellite PS_{B} du train simple TB.

L'arbre commun 251 porte, libres en rotation et montés sur deux paliers convenables, respectivement :
- la couronne CA, commune aux deux trains épicycloïdaux 238, 237 du premier train composé TA, et la couronne CC1 du premier train épicycloïdal 231' du second train composé TC ;
- le planétaire PC du second train composé TC solidaire de la couronne CB du train simple TB.

Dans ce mode de réalisation, la couronne CA des deux trains épicycloïdaux 238 et 237 du premier train composé comporte une denture unique pour attaquer un seul pignon du satellite SA monté sur le porte satellite PS_{A}. Chaque satellite SA du porte satellite PS_{A} est double, c'est-à-dire qu'il porte :
- un premier pignon engrené entre le planétaire PA₁ du train épicycloïdal 238 et la denture unique, ici intérieure, de la couronne CA commune aux deux trains épicycloïdaux ;
- un second pignon solidaire du premier pignon par leur axe commun et engrené sur le planétaire PA₂ du second train épicycloïdal 237 du premier train composé TA.

Le porte satellite PS_{A} du premier train composé est monté libre en rotation sur un palier convenable disposé sur l'arbre 250 de sortie du moteur thermique 230. Le porte satellite PSA est solidaire d'une roue dentée engrenée sur un pignon solidaire des roues du véhicule 233.

Dans ce mode de réalisation, la couronne CA porte aussi une denture extérieure qui est engrenée avec un pignon 253 monté en bout d'arbre du rotor de la première machine électrique 231 du variateur électrique.

Dans ce mode de réalisation, le planétaire PC commun aux deux trains épicycloïdaux 231' et 236 comporte une denture extérieure unique pour attaquer un seul pignon du satellite SC monté sur le porte satellite PS_{C} du second train composé TC chaque satellite SC du porte satellite PS_{C} est double, c'est-à-dire qu'il porte :
- un premier pignon engrené sur le planétaire PC d'une part et sur une denture intérieure de la couronne CC1 du train épicycloïdal 231' (Figure 7) solidaire de la couronne commune CA du premier train composé TA ;
- un second pignon, solidaire du premier pignon par leur axe commun et engrené sur une denture intérieure de la couronne CC2 du second train épicycloïdal 236 (Figure 7) du second train composé TC.

Le porte satellite PSC du second train composé est monté libre en rotation entre le planétaire PC du second train composé TC et la couronne CC1 de son premier train épicycloïdal 231' (Figure 7).

L'arbre 251 porte le porte satellite PS_{B} du train simple TB qui tourne sur le planétaire PB dont l'arbre 252, aligné avec les arbres 251 et 250 est connecté à la seconde machine électrique 232.

Les freins 244 et 244' ont été schématiquement représenté dans l'intervalle axial compris entre le train simple TB et le second train composé TC.

Le second frein 244 comporte une première garniture solidaire de la couronne CC2 du second train épicycloïdal 236 du second train composé TC et une seconde garniture solidaire du carter 245 de la boîte de vitesses. Un actionneur de frein (non représenté) est disposé entre les deux garnitures de sorte que, sous la commande du contrôleur 249 de changement de modes de transmission, le second frein 244' soit ou bien ouvert, ou bien serré.

Le premier frein 244 comporte une première garniture solidaire du porte satellite PSC du second train composé TC et une seconde garniture solidaire du carter 245 de la boîte de vitesses. Un actionneur de frein (non représenté) est disposé entre les deux garnitures de sorte que, sous la commande du contrôleur 249 de changement de modes de transmission, le premier frein 244 soit ou bien ouvert, ou bien serré.

On remarque que le système de changement de modes pourrait être implanté à l'extérieur de cet encombrement de façon à resserrer encore l'écartement axial ou longitudinal d'une telle boîte de vitesses. Dans ce cas, les deux freins 244 et 244' sont écartés de l'arbre central 251.

Le système de changement de modes est réalisé de manière compacte, le train composé TC et la partie de freinage 244, 244', 245 pouvant être intégrée à part.

## Revendications

1. Transmission infiniment variable à dérivation de puissance à deux modes de fonctionnement, dont les éléments constitutifs sont répartis entre deux voies de puissance reliant en parallèle le moteur thermique (130) aux roues (133) du véhicule, constituant une voie de puissance principale et une voie de puissance secondaire portant un système de changement de mode, ces éléments incluant deux trains épicyloïdaux (141, 142), deux machines électriques (131, 132), un étage de réduction (139), et des moyens de commande répartissant différemment la puissance entre les deux voies de puissance selon la mode de fonctionnement de la transmission, **caractérisée en ce qu'**un train épicycloïdal composé (138, 137) est disposé sur la voie de puissance principale, et **en ce que** la voie secondaire comporte un train épicycloïdal (141, 142) associé à chaque machine électrique (131, 132) du variateur électrique, et le système de changement de modes pour immobiliser sélectivement au moins un élément tournant de l'un desdits trains épicycloïdaux associés à une desdites machines électriques de sorte qu'au moins un mode de fonctionnement de la transmission infiniment variable soit sélectionné parmi une pluralité de modes de fonctionnement.

2. Transmission selon la revendication 1, **caractérisée en ce que** :
le moteur thermique (130) est connecté par l'intermédiaire d'un réducteur (136) à la couronne (C2) et au porte satellite (ps1) respectivement d'un premier train épicycloïdal (137) et d'un second train épicycloïdal (138) de la boîte de vitesses (134) proprement dite ;
les roues du véhicule (133) sont connectées à la boîte de vitesses (134) par l'intermédiaire d'un réducteur (139) de raison K₀ dont un accès est couplé respectivement au porte satellite (ps2) et à la couronne (C1) du premier train épicycloïdal (137) et du second train épicycloïdal (138), les premier (137) et second (138) trains épicycloïdaux constituant un traira épicycloïdal composé disposé sur le chemin principal de dérivation de puissance.

3. Transmission selon la revendication 2, **caractérisée en ce que** une première machine électrique (131) du variateur électrique est connectée à un réducteur (140) couplé au planétaire (p2) du premier train épicycloïdal (137) et à la couronne (C) d'un troisième train épicycloïdal (141) dont le planétaire (p) est couplé à la couronne ( C) d'un quatrième train épicycloïdal (142), le planétaire (p) du troisième train épicycloïdal (141) et la couronne (C ) du quatrième train épicycloïdal (142) étant connectés au bâti (145) par l'intermédiaire d'un frein (144') et **en ce que** le porte satellite du troisième train épicycloïdal (141) est lui-même couplé à un tel point fixe (145) par le moyen d'un frein (144).

4. Transmission selon la revendication 2, **caractérisée en ce que** une seconde machine électrique (132) du variateur électrique est couplée par l'intermédiaire d'un réducteur (143), de raison Kₑ₂ à un quatrième train épicycloïdal (142) par son planétaire (p).

5. Transmission selon l'une des revendications 2-4, **caractérisée en ce que** le réducteur (136) comporte un pignon (154) engrené avec une denture (155), montée sur un palier libre en rotation autour d'un arbre central (156) de boîte de vitesses solidaire du porte satellite (159; PS1, figure 3) du second train épicycloïdal (138) du train composé de la vole de puissance principale, le porte satellite (159) du second train épicycloïdal (138) est solidaire de la couronne (175) du premier train épicycloïdal (137), la couronne (161) du second train épicycloïdal (138) étant connectée ou solidaire du porte satellite (161) du premier train épicycloïdal (137).

6. Transmission selon la revendication 5, **caractérisée en ce que** les roues du véhicule sont couplées sur un arbre (153) par un pignon (158) à une denture (157) solidaire de la couronne (161) du second train épicycloïdal (138).

7. Transmission selon l'une quelconque des revendications 5 ou 6, **caractérisée ce que** :
la voie secondaire de puissance comporte des troisième et quatrième (142) trains épicycloïdaux pour son couplage au variateur, au système de changement de mode et à la voie principale de puissance,
le troisième train épicycloïdal (141) comportant un planétaire (176; P, figure 3), une couronne (177 ;C, figure 3) et un porte satellite (168) solidaire d'un second frein (169) ;
le quatrième train épicycloïdal (142) comportant un porte satellite (163) qui couple son planétaire (178) à sa couronne (179).
le planétaire (176) du troisième train épicycloïdal (141) étant solidaire de la couronne (179) du quatrième train épicycloïdal (142), et la couronne (177) du troisième train épicycloïdal (141) étant solidaire du planétaire (162) du premier train épicycloïdal (137) ;
l'arbre (156) de boîte de vitesses (134) étant terminé à son autre extrémité par rapport au moteur thermique (150) par un pignon (171) connecté à la seconde machine électrique (152) ;
le planétaire (162) du premier train épicycloïdal (137, figure 3) du train composé portant une denture extérieure (165) qui est couplée à un pignon (167) solidaire de l'arbre du rotor de la première machine électrique (151) du variateur électrique.

8. Transmission selon la revendication 7, **caractérisée en ce que** le planétaire (176) du troisième train épicycloïdal (141) ainsi que la couronne (179) du quatrième train epicycloïdal sont solidarisés à une première garniture d'un frein (170 ; 144', figure 3), l'autre garniture du frein (170) étant solidaire du carter de la boîte de vitesses et un actionneur de frein permet d'activer ou non le freinage en rapprochant les deux garnitures sous la commande du contrôleur de mode de fonctionnement de la transmission (135, 149).

9. Transmission selon la revendication 7, **caractérisée en ce que** le porte satellite (168) du troisième train épicycloïdal (141), est solidaire d'une première garniture d'un frein (169) dont l'autre garniture du frein (169) est solidaire du carter de boîte de vitesses et un actionneur de frein, associé au frein (169) du porte satellite (168), permet d'activer ou non son freinage en rapprochant les deux garnitures sous la commande de contrôleur de modes de fonctionnement de la transmission (135, 149).

10. Transmission selon la revendication 3, **caractérisée en ce qu'**elle comporte un contrôleur (135) de son fonctionnement qui comporte :
- un contrôleur (146) du point de fonctionnement du groupe motopropulseur en fonction de contraintes prédéterminées ;
- un contrôleur (147) du point de fonctionnement du moteur thermique (130) qui reçoit une consigne de point de fonctionnement du contrôleur (135) et qui produit des signaux de commande convenable à des actionneurs de détermination du point de fonctionnement du moteur thermique (130) ;
- un contrôleur (148) du fonctionnement des première (131) et seconde (132) machines électriques de sorte que soit déterminée pour chaque machine son mode de fonctionnement moteur ou génératrice, sa vitesse de rotation et/ou son couple ou encore sa tension d'induit et/ou son courant d'induit, notamment en relation avec un organe de gestion d'un accumulateur d'énergie électrique, ledit contrôleur (148) recevant une consigne de point de fonctionnement du contrôleur (135) et produisant des signaux de commande convenable à des circuits de pilotage des machines électriques :
- un contrôleur (149) de changement de mode de transmission qui détermine l'état ouvert ou fermé du premier frein (144) et/ou du second frein (144') de sorte qu'un mode parmi au moins deux modes de fonctionnement de la transmission infiniment variable soit sélectionné sous la commande du contrôleur (135).

11. Transmission infiniment variable à dérivation de puissance à deux modes de fonctionnement, dont les éléments constitutifs sont répartis entre deux voies de puissance reliant en parallèle le moteur thermique (41) aux roues (43) du véhicule, constituant une voie de puissance principale et une voie de puissance secondaire portant un système de changement de mode, ces éléments incluant deux trains épicycloïdaux (45, 46), deux machines électriques (42, 44), un étage de réduction (53), et des moyens de commande répartissant différemment la puissance entre les deux voies de puissance selon le mode de fonctionnement de la transmission, **caractérisée en ce qu'**elle comporte un troisième train épicycloïdal (47) en série avec l'un des deux trains épicycloïdaux (45, 46) sur l'une des deux voies de puissance, ledit troisième train épicycloïdal (47) coopérant avec lesdits moyens de commande (48, 49) de sorte que dans un premier mode de fonctionnement tous les éléments (c, p, ps) du troisième train (47) tournent à la même vitesse.

12. Transmission selon la revendication 11, **caractérisée en ce que**, sur la première voie de puissance, les roues du véhicule (43) sont connectées par l'intermédiaire d'un réducteur (53) au porte satellite du premier train épicycloïdal (45), dont le planétaire est connecté directement à l'arbre du moteur thermique (41), et **en ce que** la seconde voie de puissance (51, 47, 46, 44) est couplée au premier train épicycloïdal (45) par sa couronne.

13. Transmission selon l'une des revendications 11 ou 12, **caractérisée en ce que** la couronne (c) du troisième train épicycloïdal (47) est connectée à la couronne du second train épicycloïdal (46) et **en ce que** le planétaire (p) du troisième train épicycloïdal (47) est à la fois solidaire de la couronne du premier train épicycloïdal (45) et du rotor de la première machine électrique (44).

14. Transmission selon la revendication 13, **caractérisée en ce que** le porte satellite du second train épicycloïdal (46) est connecté au moteur thermique (41) par l'intermédiaire d'un réducteur (51), dont le rapport de réduction est adaptable à la puissance mécanique et au régime de rotation optimal du moteur thermique (41) auquel il est connecté.

15. Transmission selon la revendication 14, **caractérisée en ce que** le planétaire du second train épicycloïdal (46) est connecté au rotor de la seconde machine électrique (42).

16. Transmission selon la revendication 13, **caractérisée en ce que** le porte satellite du troisième train épicycloïdal (47) est immobilisé par activation du système de changement de mode au carter (50) par l'intermédiaire d'un frein (48) disposé entre le carter (50) et le porte satellite (ps) du troisième train épicycloïdal (47).

17. Transmission selon la revendication 16, **caractérisée en ce que** le porte satellite (ps) du troisième train épicycloïdal (47) est connecté à son planétaire (p) par l'intermédiaire d'un embrayage (49) commandé par le système de changement de mode.

18. Transmission selon l'une des revendications 11 à 17 **caractérisée en ce que** les second et troisième trains épicycloïdaux comportent une couronne commune (75), **en ce que** le porte satellite (74) du troisième train épicycloïdal (47) tourne librement autour de l'arbre de son planétaire (76), le dit arbre étant connecté à l'arbre porteur de la couronne du premier train épicycloïdal (45), **en ce que** le porte satellite du second train épicycloïdal (46) tourne librement autour de l'arbre de son planétaire (79), le dit arbre étant connecté à l'arbre du rotor de la seconde machine électrique (42), et **en ce que** le porte satellite (68) du premier train épicycloïdal (45) tourne librement autour de l'arbre (60) de son planétaire, ledit arbre (60) étant solidaire à ses deux extrémités de l'arbre moteur du moteur thermique (41) et du planétaire.

19. Transmission selon la revendication 18, **caractérisée en ce que** la première machine électrique (44) est disposée hors de l'axe commun du moteur thermique (41) et des premier (45), second (46) et troisième (47) trains épicycloïdaux et de la seconde machine électrique (42), son arbre de rotor étant solidaire d'un pignon (72) engrené sur une denture extérieure (71) de la couronne du premier train épicycloïdal (45).

20. Transmission selon la revendication 17, **caractérisée en ce qu'**elle comporte un contrôleur (80) de son fonctionnement qui comporte :
- un contrôleur (81) du point de fonctionnement du groupe motopropulseur en fonction de contraintes prédéterminées ;
- un contrôleur (82) du point de fonctionnement du moteur thermique (41) qui reçoit une consigne de point de fonctionnement du contrôleur (81) et qui produit des signaux de commande convenable à des actionneurs de détermination du point de fonctionnement du moteur thermique (41) ;
- un contrôleur (83) du fonctionnement des première (44) et seconde (42) machines électriques de sorte que soit déterminée pour chaque machine son mode de fonctionnement moteur ou génératrice, sa vitesse de rotation et/ou son couple ou encore sa tension d'induit et/ou son courant d'inuit, notamment en relation avec un organe de gestion d'un accumulateur d'énergie électrique, ledit contrôleur (83) recevant une consigne de point de fonctionnement du contrôleur (81) et produisant des signaux de commande convenable à des circuits de pilotage des machines électriques ;
- un contrôleur (84) de changement de mode de transmission qui détermine l'état ouvert ou fermé de l'embrayage (49) et/ou du frein (48) de sorte qu'un mode parmi au moins deux modes de fonctionnement de la transmission infiniment variable soit sélectionné sous la commande du contrôleur (81).

21. Transmission infiniment variable à dérivation de puissance à deux modes de fonctionnement, dont les éléments constitutifs sont répartis entre deux voies de puissance reliant en parallèle le moteur 230 233 thermique (230) aux roues (233) du véhicule, constituant une voie de puissance principale et une voie de puissance secondaire portant un système de changement de mode, ces éléments incluant deux trains épicycloïdaux (TB, TC), deux machines électriques (231, 232) un étage de réduction (239), et des moyens de commande répartissant différemment la puissance entre les deux voies de puissance selon le mode de fonctionnement de la transmission, **caractérisée en ce qu'**elle comporte un premier train épicycloïdal composé (TA) qui permet de connecter le moteur thermique (230) aux roues du véhicule (233) selon la voie principale de dérivation de puissance, et un train épicycloïdal simple (TB) qui permet de réaliser la dérivation de puissance ainsi qu'un second train épicycloïdal composé (TC) de façon à réaliser le système de changement de mode entre au moins deux modes de fonctionnement de la transmission infiniment variable.

22. Transmission selon la revendication 21, **caractérisée en ce que** le premier train composé (TA) comporte un premier train épicycloïdal (238) auquel le moteur thermique (230) est connecté par son planétaire (P1), le porte satellite (ps) du premier train épicycloïdal (238) étant connecté à un réducteur (239) dont la sortie est connectée aux routes motrices (233) du véhicule et au porte satellite d'un second train épicycloïdal (237) du premier train composé (TA), les couronnes des premier (238) et second (237) trains épicycloïdaux étant connectées ensemble et leur mouvement commun transmis à un couplage sur la voie secondaire de dérivation de puissance.

23. Transmission selon la revendication 22, **caractérisée en ce que** le planétaire (P2) du second train épicycloïdal (237) du premier train composé (TA) est lui-même connecté au porte satellite (ps) du train épicycloïdal simple (TB) dont le planétaire (p) est connecté à l'arbre de rotation de la seconde machine électrique (232), la première machine électrique (231) du variateur électrique de la transmission étant couplée par son arbre de sortie à un réducteur (240) connecté à la fois aux couronnes des premier (238) et second (237) trains épicycloïdaux du premier train composé (TA), ainsi qu'à la couronne d'un premier train épicycloïdal (231') du second train composé (TC), qui comporte aussi un second train épicycloïdal (236) et qui est configuré de sorte que les portes satellites et les planétaires de ses deux trains épicycloïdaux (231', 236) sont couplés les uns aux autres, **en ce que** les portes satellites (PS) du second train composé (TC) sont solidaires temporairement d'un bâti ou châssis (245) par l'intermédiaire d'un premier frein (244) tandis que la couronne (C) du second train épicycloïdal (236) du second train composé (TC) peut être solidarisée du châssis ou point fixe (245) par l'intermédiaire d'un second frein (244') et **en ce que** les planétaires des trains épicycloïdaux (231', 236) du second train composé (TC) sont connectés à la couronne du train épicycloïdal simple (TB).

24. Transmission selon l'une des revendications 22 ou 23, **caractérisée en ce que** l'arbre (250) de sortie du moteur thermique (230) est aligné avec l'arbre commun de rotation (251) du train composé principal (TA), du train composé de changement de modes (TC), ainsi que du train simple (TB) de composition des deux voies de dérivation,
**en ce que** le moteur thermique (230) est directement connecté sans réducteur intermédiaire par cet arbre (250) au planétaire (PA₁) du premier train épicycloïdal (238, figure 7) du premier train composé (TA), le porte satellite (PS_{A}) étant double et commun aux deux trains épicycloïdaux (237, 238) du premier train composé (TA), le porte satellite (PS_{A}) étant tournant sur le planétaire (PA₁) du premier train épicycloïdal (238, figure 7) fixé en bout d'arbre (250) du moteur thermique (230), et tournant sur le planétaire (PA₂) du second train épicycloïdal (237, figure 7) du premier train composé (TA), fixé à une première partie de l'arbre commun (251), dont une seconde partie est alignée avec l'arbre (250) de sortie du moteur thermique (230) et porte le porte satellite (PS_{B}) du train simple (TB), l'arbre commun (251) portant, libres en rotation sur deux paliers, respectivement :
- la couronne (CA), commune aux deux trains épicycloïdaux (238, 237) du premier train composé (TA), et la couronne (CC1) du premier train épicycloïdal (231') du second train composé (TC);
- le planétaire (PC) du second train composé (TC) solidaire de la couronne (CB) du train simple (TB).

25. Transmission selon la revendication 24, **caractérisée en ce que** la couronne (CA) des deux trains épicycloïdaux (238, 237) du premier train composé (TA) comporte une denture unique pour attaquer un seul pignon du satellite (SA) monté sur le porte satellite (PS_{A}), chaque satellite (S_{A}) du porte satellite (PS_{A}) étant double, c'est-à-dire qu'il porte :
- un premier pignon engrené entre le planétaire (PA₁) du premier train épicycloïdal (238) et la denture unique, ici intérieure, de la couronne (GA) commune aux deux trains épicycloïdaux ;
- un second pignon solidaire du premier pignon par leur axe commun et engrené sur le planétaire (PA₂) du second train épicycloïdal (237) du premier train composé (TA) ;
**en ce que** le porte satellite (PS_{A}) du premier train composé (TA) est monté libre en rotation sur un palier convenable disposé sur l'arbre (250) de sortie du moteur thermique (230) et est solidaire d'une roue dentée engrenée sur un pignon solidaire des roues du véhicule (233).

26. Transmission selon la revendication 25, **caractérisée en ce que** la couronne (CA) commune aux deux trains épicycloïdaux (237, 238) porte aussi une denture extérieure qui est engrenée avec un pignon (253) monté en bout d'arbre du rotor de la première machine électrique (231) du variateur électrique.

27. Transmission selon la revendication 26, **caractérisée en ce que** le planétaire (PC) commun aux deux trains épicycloïdaux (231' 236) du second train composé (TC) comporte une denture extérieure unique pour attaquer un seul pignon du satellite (SC) monté sur le porte satellite (PS_{C}) du second train composé (TC), chaque satellite (SC) du porte satellite (PS_{C}) étant double, c'est-à-dire qu'il porte :
- un premier pignon engrené sur le planétaire (PC) d'une part et sur une denture intérieure de la couronne (CC1) du train épicycloïdal (231') solidaire de la couronne commune (CA) du premier train composé (TA) ;
- un second pignon, solidaire du premier pignon par leur axe commun et engrené sur une denture intérieure de la couronne (CC2) du second train épicycloïdal (236) du second train composé (TC) ;
et **en ce que** le porte satellite (PSC) du second train composé (TC) est monté libre en rotation entre le planétaire (PC) et la couronne (CC1) de son premier train épicycloïdal (231').

28. Transmission selon la revendication 27, **caractérisée en ce que** l'arbre commun (251) porte le porte satellite (PS_{B}) du train simple (TB) qui tourne sur le planétaire (PB) dont l'arbre (252), aligné avec l'arbre commun (251) et l'arbre de sortie (250) du moteur thermique (230), est connecté au rotor de la seconde machine électrique (232).

29. Transmission selon la revendication 28, **caractérisée en ce que** le système de changement de modes comporte :
- un second frein (244') qui comporte une première garniture solidaire de la couronne (CC2) du second train épicycloïdal (236) du second train composé (TC) et une seconde garniture solidaire du carter (245) de la boîte de vitesses, un actionneur de frein étant disposé entre les deux garnitures de sorte que, sous la commande d'un contrôleur (249) de changement de modes de transmission, le second frein (244') soit ou bien ouvert, ou bien serré ;
- un premier frein (244) qui comporte une première garniture solidaire du porte satellite (PSC) du second train composé (TC) et une seconde garniture solidaire du carter (245) de la boîte de vitesses, un actionneur de frein étant disposé entre les deux garnitures de sorte que, sous la commande du contrôleur (249) de changement de modes de transmission, le premier frein (244) soit ou bien ouvert, de transmission, le premier frein (244') soit ou bien ouvert, ou bien serré.

30. Transmission selon l'une des revendications 23 ou 29, **caractérisée en ce qu'**elle comporte un contrôleur (235) de son fonctionnement connecté par un bus (B) à différents capteurs de l'état de fonctionnement du véhicule ainsi qu'à des capteurs de détection de l'intention du conducteur et à une pluralité de contrôleurs qui comportent :
- un contrôleur (246) du point de fonctionnement du groupe motopropulseur en fonction de contraintes prédéterminées ;
- un contrôleur (247) du point de fonctionnement du moteur thermique (230) qui reçoit une consigne de point de fonctionnement du contrôleur de fonctionnement (235) et qui produit des signaux de commande convenable à des actionneurs de détermination du point de fonctionnement du moteur thermique (230) ;
- un contrôleur (248) du fonctionnement des première (231) et seconde (232) machines électriques de sorte que soit déterminé pour chaque machine son mode de fonctionnement moteur ou génératrice, sa vitesse de rotation et/our son couple ou encore sa tension d'induit et/our son courant d'induit, notamment en relation avec un organe de gestion d'un accumulateur d'énergie électrique, ledit contrôleur (248) recevant une consigne de point de fonctionnement du contrôleur de fonctionnement (235) et produisant des signaux de commande convenable à des circuits de pilotage des machines électriques pour déterminer leurs points de fonctionnement respectifs selon une loi courant- tension I, à quatre quadrants ;
- un contrôleur (249) de changement de mode de transmission qui détermine l'état ouvert ou fermé du premier frein (244) et/ou du second frein (244') de sorte qu'un mode parmi au moins trois modes de fonctionnement de la transmission infiniment variable soit sélectionné sous la commande du contrôleur de fonctionnement (235), parmi lesquels :
- dans le premier mode de fonctionnement, le frein (244) bloque le porte satellite (PS) des deux trains épicycloïdaux (231', 236) du second train composé (TC), la couronne (C) du second train épicycloïdal (236) tourne librement et le train (TC) fonctionne comme un train simple composé de la couronne du premier train épicycloïdal (231'), du porte satellite commun (PS) et du planétaire commun (P) ;
- dans un second mode de fonctionnement, le système de changements de mode est placé de sorte que les deux freins (244, 244') sont tous les deux serrés, tous les éléments du train composé (TC) étant bloqués de :sorte que les deux machines électriques (231, 232) se trouvent directement connectées à la voie principale de dérivation de puissance et peuvent aussi bien fonctionner en génératrice qu'en moteur l'une ou l'autre ou l'une et l'autre ;
- dans un troisième mode de fonctionnement, le premier frein (244) est ouvert et le deuxième frein (244') est serré, de sorte que la couronne (C) du second train épicycloïdal (236) est freinée et sert de point d'appui.

## Claims

1. Infinitely variable transmission with power splitting with two operating modes, whose constituent elements are distributed between two power pathways connecting in parallel the engine (130) to the wheels (133) of the vehicle, constituting a main power pathway and a secondary power pathway carrying a mode change system, these elements including two epicyclic trains (141,142), two electric machines (131,132), a reduction stage (139), and control means distributing the power differently between the two power pathways according to the operating mode of the transmission, **characterized in that** a compound epicyclic train (138, 137) is disposed on the main power pathway, and **in that** the secondary pathway comprises an epicyclic train (141,142) associated with each electric machine (131,132) of the electric variator, and the system for changing modes for selectively immobilizing at least one rotating element of one of the said epicyclic trains associated with one of the said electric machines so that at least one operating mode of the infinitely variable transmission is selected from among a plurality of operating modes.

2. Transmission according to Claim 1, **characterized in that**:
the engine (130) is connected by way of a reduction gear (136) to the annulus gear (C2) and to the satellite carrier (ps1) respectively of a first epicyclic train (137) and of a second epicyclic train (138) of the gearbox (134) proper;
the wheels of the vehicle (133) are connected to the gearbox (134) by way of a reduction gear (139) of ratio K₀ an access of which is coupled respectively to the satellite carrier (ps2) and to the annulus gear (C1) of the first epicyclic train (137) and of the second epicyclic train (138), the first (137) and second (138) epicyclic trains constituting a compound epicyclic train disposed on the power splitting main path.

3. Transmission according to Claim 2, **characterized in that** a first electric machine (131) of the electric variator is connected to a reduction gear (140) coupled to the planet gear (p2) of the first epicyclic train (137) and to the annulus gear (C) of a third epicyclic train (141) whose planet gear (p) is coupled to the annulus gear (C) of a fourth epicyclic train (142), the planet gear (p) of the third epicyclic train (141) and the annulus gear (C) of the fourth epicyclic train (142) being connected to the frame (145) by way of a brake (144') and **in that** the satellite carrier of the third epicyclic train (141) is itself coupled to such a fixed point (145) by means of a brake (144).

4. Transmission according to Claim 2, **characterized in that** a second electric machine (132) of the electric variator is coupled by way of a reduction gear (143), of ratio Kₑ₂ to a fourth epicyclic train (142) by its planet gear (p).

5. Transmission according to one of Claims 2 - 4, **characterized in that** the reduction gear (136) comprises a pinion (154) meshed with a toothing (155), mounted on a bearing free to rotate about a gearbox central shaft (156) secured to the satellite carrier (159; PS1, Figure 3) of the second epicyclic train of the compound train of the main power pathway, the satellite carrier (159) of the second epicyclic train (138) is secured to the annulus gear (175) of the first epicyclic train (137), the annulus gear (161) of the second epicyclic train (138) being connected or secured to the satellite carrier (161) of the first epicyclic train (137).

6. Transmission according to Claim 5, **characterized in that** the wheels of the vehicle are coupled on a shaft (153) by a pinion (158) to a toothing (157) secured to the annulus gear (161) of the second epicyclic train (138).

7. Transmission according to any one of Claims 5 or 6, **characterized in that**:
the secondary power pathway comprises third (141) and fourth (142) epicyclic trains for its coupling to the variator, to the mode change system and to the main power pathway,
the third epicyclic train (141) comprising a planet gear (176; P, Figure 3), an annulus gear (177; C, Figure 3) and a satellite carrier (168) secured to a second brake (169);
the fourth epicyclic train (142) comprising a satellite carrier (163) which couples its planet gear (178) to its annulus gear (179),
the planet gear (176) of the third epicyclic train (141) being secured to the annulus gear (179) of the fourth epicyclic train (142), and the annulus gear (177) of the third epicyclic train (141) being secured to the planet gear (162) of the first epicyclic train (137) ;
the gearbox (134) shaft (156) being terminated at its other end with respect to the engine (150) by a pinion (171) connected to the second electric machine (152);
the planet gear (162) of the first epicyclic train (137, Figure 3) of the compound train carrying an outer toothing (165) which is coupled to a pinion (167) secured to the shaft of the rotor of the first electric machine (151) of the electric variator.

8. Transmission according to Claim 7, **characterized in that** the planet gear (176) of the third epicyclic train (141) as well as the annulus gear (179) of the fourth epicyclic train are tied to a first lining of a brake (170; 144', Figure 3), the other lining of the brake (170) being secured to the casing of the gearbox and a brake actuator makes it possible to activate or not the braking by bringing the two linings together under the control of the transmission operating mode controller (135,149).

9. Transmission according to Claim 7, **characterized in that** the satellite carrier (168) of the third epicyclic train (141) is secured to a first lining of a brake (169) whose other lining of the brake (169) is secured to the gearbox casing and a brake actuator, associated with the brake (169) of the satellite carrier (168), makes it possible to activate or not its braking by bringing the two linings together under the control of the transmission operating mode controller (135,149).

10. Transmission according to Claim 3, **characterized in that** it comprises a controller (135) of its operation which comprises:
- a controller (146) of the operating point of the propulsion unit as a function of predetermined constraints;
- a controller (147) of the operating point of the engine (130) which receives an operating point instruction from the controller (135) and which produces control signals appropriate to actuators for determining the operating point of the engine (130);
- a controller (148) of the operation of the first (131) and second (132) electric machines so that for each machine its motor or generating operating mode, its rotation speed and/or its torque or else its armature voltage and/or its armature current is determined, in particular in conjunction with a member for managing an electrical energy accumulator, the said controller (148) receiving an operating point instruction from the controller (135) and producing control signals appropriate to circuits for commanding the electric machines;
- a transmission mode change controller (149) which determines the open or closed state of the first brake (144) and/or of the second brake (144') so that one mode out of at least two operating modes of the infinitely variable transmission is selected under the control of the controller (135).

11. Infinitely variable transmission with power splitting with two operating modes, whose constituent elements are distributed between two power pathways connecting in parallel the engine (41) to the wheels (43) of the vehicle, constituting a main power pathway and a secondary power pathway carrying a mode change system, these elements including two epicyclic trains (45,46), two electric machines (42,44), a reduction stage (53), and control means distributing the power differently between the two power pathways according to the operating mode of the transmission, **characterized in that** it comprises a third epicyclic train (47) in series with one of the two epicyclic trains (45,46) on one of the two power pathways, the said third epicyclic train (47) cooperating with the said control means (48,49) so that in a first operating mode all the elements (c, p, ps) of the third train (47) rotate at the same speed.

12. Transmission according to Claim 11, **characterized in that**, on the first power pathway, the wheels of the vehicle (43) are connected by way of a reduction gear (53) to the satellite carrier of the first epicyclic train (45), whose planet gear is connected directly to the shaft of the engine (41), and **in that** the second power pathway (51, 47, 46, 44) is coupled to the first epicyclic train (45) by its annulus gear.

13. Transmission according to one of Claims 11 or 12, **characterized in that** the annulus gear (c) of the third epicyclic train (47) is connected to the annulus gear of the second epicyclic train (46) and **in that** the planet gear (p) of the third epicyclic train (47) is at one and the same time secured to the annulus gear of the first epicyclic train (45) and the rotor of the first electric machine (44).

14. Transmission according to Claim 13, **characterized in that** the satellite carrier of the second epicyclic train (46) is connected to the engine (41) by way of a reduction gear (51), whose reduction ratio is adaptable to the mechanical power and to the optimal rotation regime of the engine (41) to which it is connected.

15. Transmission according to Claim 14, **characterized in that** the planet gear of the second epicyclic train (46) is connected to the rotor of the second electric machine (42).

16. Transmission according to Claim 13, **characterized in that** the satellite carrier of the third epicyclic train (47) is immobilized by activation of the mode change system at the casing (50) by way of a brake (48) disposed between the casing (50) and the satellite carrier (ps) of the third epicyclic train (47).

17. Transmission according to Claim 16, **characterized in that** the satellite carrier (ps) of the third epicyclic train (47) is connected to its planet gear (p) by way of a clutch (49) controlled by the mode change system.

18. Transmission according to one of Claims 11 to 17, **characterized in that** the second and third epicyclic trains comprise a common annulus gear (75), **in that** the satellite carrier (74) of the third epicyclic train (47) rotates freely about the shaft of its planet gear (76), the said shaft being connected to the carrier shaft of the annulus gear of the first epicyclic train (45), **in that** the satellite carrier of the second epicyclic train (46) rotates freely about the shaft of its planet gear (79), the said shaft being connected to the shaft of the rotor of the second electric machine (42), and **in that** the satellite carrier (68) of the first epicyclic train (45) rotates freely about the shaft (60) of its planet gear, the said shaft (60) being secured at its two ends to the motor shaft of the engine (41) and the planet gear.

19. Transmission according to Claim 18, **characterized in that** the first electric machine (44) is disposed off the common axis of the engine (41) and of the first (45), second (46) and third (47) epicyclic trains and of the second electric machine (42), its rotor shaft being secured to a pinion (72) meshed with an outer toothing (71) of the annulus gear of the first epicyclic train (45).

20. Transmission according to Claim 17, **characterized in that** it comprises a controller (80) of its operation which comprises:
- a controller (81) of the operating point of the propulsion unit as a function of predetermined constraints;
- a controller (82) of the operating point of the engine (41) which receives an operating point instruction from the controller (81) and which produces control signals appropriate to actuators for determining the operating point of the engine (41);
- a controller (83) of the operation of the first (44) and second (42) electric machines so that for each machine its motor or generating operating mode, its rotation speed and/or its torque or else its armature voltage and/or its armature current is determined, in particular in conjunction with a member for managing an electrical energy accumulator, the said controller (83) receiving an operating point instruction from the controller (81) and producing control signals appropriate to circuits for commanding the electric machines;
- a transmission mode change controller (84) which determines the open or closed state of the clutch (49) and/or of the brake (48) so that one mode out of at least two operating modes of the infinitely variable transmission is selected under the control of the controller (81).

21. Infinitely variable transmission with power splitting with two operating modes, whose constituent elements are distributed between two power pathways connecting in parallel the engine (230) to the wheels (233) of the vehicle, constituting a main power pathway and a secondary power pathway carrying a mode change system, these elements including two epicyclic trains (TB,TC), two electric machines (231,232), a reduction stage (239), and control means distributing the power differently between the two power pathways according to the operating mode of the transmission, **characterized in that** it comprises a first compound epicyclic train (TA) which makes it possible to connect the engine (230) to the wheels of the vehicle (233) according to the power splitting main pathway, and a simple epicyclic train (TB) which makes it possible to effect the power splitting as well as a second compound epicyclic train (TC) so as to achieve the system for changing mode between at least two operating modes of the infinitely variable transmission.

22. Transmission according to Claim 21, **characterized in that** the first compound train (TA) comprises a first epicyclic train (238) to which the engine (230) is connected by its planet gear (P1), the satellite carrier (ps) of the first epicyclic train (238) being connected to a reduction gear (239) whose output is connected to the driving wheels (233) of the vehicle and to the satellite carrier of a second epicyclic train (237) of the first compound train (TA), the annulus gears of the first (238) and second (237) epicyclic trains being connected together and their common motion transmitted to a coupling on the power splitting secondary pathway.

23. Transmission according to Claim 22, **characterized in that** the planet gear (P2) of the second epicyclic train (237) of the first compound train (TA) is itself connected to the satellite carrier (ps) of the simple epicyclic train (TB) whose planet gear (p) is connected to the rotation shaft of the second electric machine (232), the first electric machine (231) of the electric variator of the transmission being coupled by its output shaft to a reduction gear (240) connected at one and the same time to the annulus gears of the first (238) and second (237) epicyclic trains of the first compound train (TA), as well as to the annulus gear of a first epicyclic train (231') of the second compound train (TC), which also comprises a second epicyclic train (236) and which is configured so that the satellite carriers and the planet gears of its two epicyclic trains (231',236) are coupled to one another, **in that** the satellite carriers (PS) of the second compound train (TC) are secured temporarily to a frame or chassis (245) by way of a first brake (244) while the annulus gear (C) of the second epicyclic train (236) of the second compound train (TC) can be tied to the chassis or fixed point (245) by way of a second brake (244') and **in that** the planet gears of the epicyclic trains (231',236) of the compound train (TC) are connected to the annulus gear of the simple epicyclic train (TB).

24. Transmission according to one of Claims 22 or 23, **characterized in that** the output shaft (250) of the engine (230) is aligned with the common rotation shaft (251) of the main compound train (TA), of the mode change compound train (TC), as well as of the simple train (TB) for compounding the two splitting pathways,
**in that** the engine (230) is directly connected without intermediate reduction gear by this shaft (250) to the planet gear (PA₁) of the first epicyclic train (238, Figure 7) of the first compound train (TA), the satellite carrier (PS_{A}) being dual and common to the two epicyclic trains (237,238) of the first compound train (TA), the satellite carrier (PS_{A}) being rotating on the planet gear (PA₁) of the first epicyclic train (238, Figure 7) fixed at the extremity of the shaft (250) of the engine (230), and rotating on the planet gear (PA₂) of the second epicyclic train (237, Figure 7) of the first compound train (TA), fixed to a first part of the common shaft (251), a second part of which is aligned with the output shaft (250) of the engine (230) and carries the satellite carrier (PS_{B}) of the simple train (TB), the common shaft (251) carrying, free to rotate on two bearings, respectively:
- the annulus gear (CA), common to the two epicyclic trains (238,237) of the first compound train (TA), and the annulus gear (CC₁) of the first epicyclic train (231') of the second compound train (TC);
- the planet gear (PC) of the second compound train (TC) secured to the annulus gear (CB) of the simple train (TB).

25. Transmission according to Claim 24, **characterized in that** the annulus gear (CA) of the two epicyclic trains (238,237) of the first compound train (TA) comprises a single toothing for driving a single pinion of the satellite (SA) mounted on the satellite carrier (PS_{A}), each satellite (SA) of the satellite carrier (PS_{A}) being dual, that is to say it carries:
- a first pinion meshed between the planet gear (PA₁) of the first epicyclic train (238) and the single toothing, here inner, of the annulus gear (CA) common to the two epicyclic trains;
- a second pinion secured to the first pinion by their common axis and meshed with the planet gear (PA₂) of the second epicyclic train (237) of the first compound train (TA);
**in that** the satellite carrier (PS_{A}) of the first compound train (TA) is mounted free to rotate on an appropriate bearing disposed on the output shaft (250) of the engine (230) and is secured to a toothed wheel meshed with a pinion secured to the wheels of the vehicle (233).

26. Transmission according to Claim 25, **characterized in that** the annulus gear (CA) common to the two epicyclic trains (237,238) also carries an outer toothing which is meshed with a pinion (253) mounted at the extremity of the shaft of the rotor of the first electric machine (231) of the electric variator.

27. Transmission according to Claim 26, **characterized in that** the planet gear (PC) common to the two epicyclic trains (231',236) of the second compound train (TC) comprises a single outer toothing for driving a single pinion of the satellite (SC) mounted on the satellite carrier (PS) of the second compound train (TC), each satellite (SC) of the satellite carrier (PS) being dual, that is to say it carries:
- a first pinion meshed with the planet gear (PC) on the one hand and with an inner toothing of the annulus gear (CC1) of the epicyclic train (231') secured to the common annulus gear (CA) of the first compound train (TA);
- a second pinion, secured to the first pinion by their common axis and meshed with an inner toothing of the annulus gear (CC2) of the second epicyclic train (236) of the second compound train (TC);
and **in that** the satellite carrier (PSC) of the second compound train (TC) is mounted free to rotate between the planet gear (PC) and the annulus gear (CC1) of its first epicyclic train (231').

28. Transmission according to Claim 27, **characterized in that** the common shaft (251) carries the satellite carrier (PS_{B}) of the simple train (TB) which rotates on the planet gear (PB) whose shaft (252), aligned with the common shaft (251) and the output shaft (250) of the engine (230), is connected to the rotor of the second electric machine (232).

29. Transmission according to Claim 28, **characterized in that** the system for changing modes comprises:
- a second brake (244') which comprises a first lining secured to the annulus gear (CC2) of the second epicyclic train (236) of the second compound train (TC) and a second lining secured to the casing (245) of the gearbox, a brake actuator being disposed between the two linings so that, under the control of a transmission mode change controller (249), the second brake (244') is either open, or locked;
- a first brake (244) which comprises a first lining secured to the satellite carrier (PSC) of the second compound train (TC) and a second lining secured to the casing (245) of the gearbox, a brake actuator being disposed between the two linings so that, under the control of the transmission mode change controller (249), the first brake (244) is either open, or locked.

30. Transmission according to one of Claims 23 or 29, **characterized in that** it comprises a controller (235) of its operation connected by a bus (B) to various sensors of the operating state of the vehicle as well as to sensors for detecting the intention of the driver and to a plurality of controllers which comprise:
- a controller (246) of the operating point of the propulsion unit as a function of predetermined constraints;
- a controller (247) of the operating point of the engine (230) which receives an operating point instruction from the operation controller (235) and which produces control signals appropriate to actuators for determining the operating point of the engine (230);
- a controller (248) of the operation of the first (231) and second (232) electric machines so that for each machine its motor or generating operating mode, its rotation speed and/or its torque or else its armature voltage and/or its armature current is determined, in particular in conjunction with a member for managing an electrical energy accumulator, the said controller (248) receiving an operating point instruction from the operation controller (235) and producing control signals appropriate to circuits for commanding the electric machines so as to determine their respective operating points according to a current-voltage law 1, with four quadrants;
- a transmission mode change controller (249) which determines the open or closed state of the first brake (244) and/or of the second brake (244') so that one mode from among at least three operating modes of the infinitely variable transmission is selected under the control of the operation controller (235), among which:
- in the first operating mode, the brake (244) disables the satellite carrier (PS) of the two epicyclic trains (231',236) of the second compound train (TC), the annulus gear (C) of the second epicyclic train (236) rotates freely and the train (TC) operates as a simple train composed of the annulus gear of the first epicyclic train (231'), of the common satellite carrier (PS) and of the common planet gear (P);
- in a second operating mode, the mode change system is placed so that the two brakes (244, 244') are both locked, all the elements of the compound train (TC) being disabled so that the two electric machines (231,232) are directly connected to the power splitting main pathway and either or both can equally well operate as generator and as motor;
- in a third operating mode, the first brake (244) is open and the second brake (244') is locked, so that the annulus gear (C) of the second epicyclic train (236) is braked and serves as support point.

## Patentansprüche

1. Stufenlos verstellbares Getriebe mit Kraftableitung in zwei Betriebsarten, dessen konstitutive Elemente zwischen zwei Kraftwegen, die die Brennkraftmaschine (130) mit den Rädern (133) des Fahrzeugs parallel verbinden und einen Hauptkraftweg sowie einen sekundären Kraftweg, der ein Betriebsartänderungssystem enthält, bilden, verteilt sind, wobei diese Elemente zwei Planetengetriebezüge (141, 142), zwei Elektromaschinen (131, 132), eine Untersetzungsstufe (139) und Steuermittel, die die Kraft zwischen den zwei Kraftwegen entsprechend der Betriebsart des Getriebes unterschiedlich verteilen, enthalten, **dadurch gekennzeichnet, dass** in dem Hauptkraftweg ein zusammengesetzter Planetengetriebezug (138, 137) angeordnet ist und dass der sekundäre Weg einen jeder Elektromaschine (131, 132) des elektrischen Variators zugeordneten Planetengetriebezug (141, 142) und das Betriebsartänderungssystem, um wahlweise wenigstens ein Drehelement eines der den Elektromaschinen zugeordneten Planetengetriebezüge unbeweglich zu machen, enthält, derart, dass wenigstens eine Betriebsart des stufenlos verstellbaren Getriebes unter mehreren Betriebsarten gewählt wird.

2. Getriebe nach Anspruch 1, **dadurch gekennzeichnet, dass**:
die Brennkraftmaschine (130) über einen Untersetzer (136) mit dem Hohlrad (C2) und dem Satellitenträger (ps1) eines ersten Planetengetriebezugs (137) bzw. eines zweiten Planetengetriebezugs (138) des eigentlichen Wechselgetriebes (134) verbunden ist; und
die Räder des Fahrzeugs (133) mit dem Wechselgetriebe (134) über einen Untersetzer (139) mit Verhältnis K₀ verbunden ist, wovon ein Eingang mit dem Satellitenträger (ps2) und mit dem Hohlrad (C1) des ersten Planetengetriebezugs (137) bzw. des zweiten Planetengetriebezugs (138) gekoppelt ist, wobei der erste Planetengetriebezug (137) und der zweite Planetengetriebezug (138) einen zusammengesetzten Planetengetriebezug bilden, der in dem Haupt-Kraftableitungsweg angeordnet ist.

3. Getriebe nach Anspruch 2, **dadurch gekennzeichnet, dass** eine erste Elektromaschine (131) des elektrischen Variators mit einem Untersetzer (140) verbunden ist, der mit dem Zentralrad (p2) des ersten Planetengetriebezugs (137) und mit dem Hohlrad (C) eines dritten Planetengetriebezugs (141) gekoppelt ist, dessen Zentralrad (p) mit dem Hohlrad (C) eines vierten Planetengetriebezugs (142) gekoppelt ist, wobei das Zentralrad (p) des dritten Planetengetriebezugs (141) und das Hohlrad (C) des vierten Planetengetriebezugs (142) mit dem Rahmen (145) über eine Bremse (144') verbunden sind, und dass der Satellitenträger des dritten Planetengetriebezugs (141) seinerseits mittels einer Bremse (144) mit einem solchen festen Punkt (145) gekoppelt ist.

4. Getriebe nach Anspruch 2, **dadurch gekennzeichnet, dass** eine zweite Elektromaschine (132) des elektrischen Variators über einen Untersetzer (143) mit Verhältnis Kₑ₂ mit einem vierten Planetengetriebezug (142) über dessen Zentralrad (p) gekoppelt ist.

5. Getriebe nach einem der Ansprüche 2-4, **dadurch gekennzeichnet, dass** der Untersetzer (136) ein Ritzel (154) aufweist, das mit einer Zahnung (155) in Eingriff ist, die an einem Lager angebracht ist, das um eine Mittelwelle (156) des Wechselgetriebes, die mit dem Satellitenträger (159; PS1, Fig. 3) des zweiten Planetengetriebezugs (138) des zusammengesetzten Zugs des Hauptkraftwegs fest verbunden ist, frei drehbar ist, wobei der Satellitenträger (159) des zweiten Planetengetriebezugs (138) mit dem Hohlrad (175) des ersten Planetengetriebezugs (137) fest verbunden ist und das Hohlrad (161) des zweiten Planetengetriebezugs (138) mit dem Satellitenträger (161) des ersten Planetengetriebezugs (137) verbunden oder daran befestigt ist.

6. Getriebe nach Anspruch 5, **dadurch gekennzeichnet, dass** die Räder des Fahrzeugs an einer Welle (153) über ein Ritzel (158) mit einer Zahnung (157), die mit dem Hohlrad (161) des zweiten Planetengetriebezugs (138) fest verbunden ist, gekoppelt sind.

7. Getriebe nach einem der Ansprüche 5 oder 6, **dadurch gekennzeichnet, dass**:
der sekundäre Kraftweg einen dritten Planetengetriebezug (141) und einen vierten Planetengetriebezug (142) für seine Kopplung mit dem Variator, mit dem Betriebsartänderungssystem und mit dem Hauptkraftweg enthält,
wobei der dritte Planetengetriebezug (141) ein Zentralrad (176; P, Fig. 3), ein Hohlrad (177; C, Fig. 3) und einen Satellitenträger (168), der mit einer zweiten Bremse (169) fest verbunden ist, enthält;
der vierte Planetengetriebezug (142) einen Satellitenträger (163) enthält, der sein Zentralrad (178) mit seinem Hohlrad (179) koppelt,
das Zentralrad (176) des dritten Planetengetriebezugs (141) mit dem Hohlrad (179) des vierten Planetengetriebezugs (142) fest verbunden ist und das Hohlrad (177) des dritten Planetengetriebezugs (141) mit dem Zentralrad (162) des ersten Planetengetriebezugs (137) fest verbunden ist;
die Welle (156) des Wechselgetriebes (134) an seinem anderen Ende in Bezug auf die Brennkraftmaschine (150) in einem Ritzel (171) endet, das mit der zweiten Elektromaschine (152) verbunden ist; und
das Zentralrad (162) des ersten Planetengetriebezugs (137, Fig. 3) des zusammengesetzten Zugs eine Außenzahnung (165) trägt, die mit einem Ritzel (167) gekoppelt ist, das mit der Welle des Rotors der ersten Elektromaschine (151) des elektrischen Variators fest verbunden ist.

8. Getriebe nach Anspruch 7, **dadurch gekennzeichnet, dass** das Zentralrad (176) des dritten Planetengetriebezugs (141) sowie das Hohlrad (179) des vierten Planetengetriebezugs mit einem Bremsbelag (170; 144', Fig. 3) fest verbunden sind, während der andere Bremsbelag (170) mit dem Gehäuse des Wechselgetriebes fest verbunden ist und ein Bremsaktor ermöglicht, die Bremse zu aktivieren oder nicht zu aktivieren, indem die beiden Beläge unter der Steuerung der Steuereinheit der Betriebsart des Getriebes (135, 149) einander angenähert werden.

9. Getriebe nach Anspruch 7, **dadurch gekennzeichnet, dass** der Satellitenträger (168) des dritten Planetengetriebezugs (141) mit einem ersten Bremsbelag (169) fest verbunden ist, während der andere Bremsbelag (169) mit dem Gehäuse des Wechselgetriebes fest verbunden ist und ein Bremsaktor, der der Bremse (169) des Satellitenträgers (168) zugeordnet ist, ermöglicht, seine Bremse zu aktivieren oder nicht zu aktivieren, indem er die beiden Beläge unter der Steuerung der Steuereinheit der Betriebsarten des Getriebes (135, 149) einander annähert.

10. Getriebe nach Anspruch 3, **dadurch gekennzeichnet, dass** es eine Steuereinheit (135) für seinen Betrieb enthält, die enthält:
- eine Steuereinheit (146) des Betriebspunkts der Triebwerksgruppe in Abhängigkeit von vorgegebenen Beschränkungen;
- eine Steuereinheit (147) des Betriebspunkts der Brennkraftmaschine (130), die einen Soll-Betriebspunkt der Steuereinheit (135) empfängt und Steuersignale erzeugt, die für Aktoren zur Bestimmung des Betriebspunkts der Brennkraftmaschine (130) geeignet sind;
- eine Steuereinheit (148) für den Betrieb der ersten Elektromaschine (131) und der zweiten Elektromaschine (132), derart, dass für jede Maschine die Motor- oder Generatorbetriebsart, ihre Drehzahl und/oder ihr Drehmoment oder aber ihre induzierte Spannung und/oder ihr induzierter Strom, insbesondere in Bezug auf ein Steuerorgan eines Akkumulators für elektrische Energie, bestimmt werden, wobei die Steuereinheit (148) einen Soll-Betriebspunkt der Steuereinheit (135) empfängt und Steuersignale erzeugt, die für Steuerschaltungen der Elektromaschinen geeignet sind,
- eine Steuereinheit (149) zum Ändern der Betriebsart des Getriebes, die den deaktivierten oder aktivierten Zustand der ersten Bremse (144) und/oder der zweiten Bremse (144') bestimmt, derart, dass eine Betriebsart unter wenigstens zwei Betriebsarten des stufenlos verstellbaren Getriebes unter der Steuerung der Steuereinheit (135) gewählt wird.

11. Stufenlos verstellbares Getriebe mit Kraftableitung in zwei Betriebsarten, dessen konstitutive Elemente zwischen zwei Kraftwegen, die die Brennkraftmaschine (41) mit den Rädern (43) des Fahrzeugs parallel verbinden und einen Hauptkraftweg sowie einen sekundären Kraftweg, der ein Betriebsartänderungssystem enthält, bilden, verteilt sind, wobei diese Elemente zwei Planetengetriebezüge (45, 46), zwei Elektromaschinen (42, 44), eine Untersetzungsstufe (53) und Steuermittel, die die Kraft zwischen den zwei Kraftwegen entsprechend der Betriebsart des Getriebes unterschiedlich verteilen, enthalten, **dadurch gekennzeichnet, dass** es einen dritten Planetengetriebezug (47) enthält, der mit einem der zwei Planetengetriebezüge (45, 46) in einem der zwei Kraftwege in Reihe geschaltet ist, wobei der dritte Planetengetriebezug (47) mit den Steuermitteln (48, 49) in der Weise zusammenwirkt, dass sich alle Elemente (c, p, ps) des dritten Zugs (47) in einer ersten Betriebsart mit derselben Drehzahl drehen.

12. Getriebe nach Anspruch 11, **dadurch gekennzeichnet, dass** in dem ersten Kraftweg die Räder des Fahrzeugs (43) über einen Untersetzer (53) mit dem Satellitenträger des ersten Planetengetriebezugs (45) verbunden sind, dessen Zentralrad direkt mit der Welle der Brennkraftmaschine (41) verbunden ist, und dass der zweite Kraftweg (51, 47, 46, 44) mit dem ersten Planetengetriebezug (45) über dessen Hohlrad gekoppelt ist.

13. Getriebe nach einem der Ansprüche 11 oder 12, **dadurch gekennzeichnet, dass** das Hohlrad (c) des dritten Planetengetriebezugs (47) mit dem Hohlrad des zweiten Planetengetriebezugs (46) verbunden ist und dass das Zentralrad (p) des dritten Planetengetriebezugs (47) zugleich mit dem Hohlrad des ersten Planetengetriebezugs (45) und mit dem Rotor der ersten Elektromaschine (44) fest verbunden ist.

14. Getriebe nach Anspruch 13, **dadurch gekennzeichnet, dass** der Satellitenträger des zweiten Planetengetriebezugs (46) mit der Brennkraftmaschine (41) über einen Untersetzer (51) verbunden ist, dessen Untersetzungsverhältnis an die mechanische Kraft und an den optimalen Drehzahlbereich der Brennkraftmaschine (41), mit der er verbunden ist, angepasst werden kann.

15. Getriebe nach Anspruch 14, **dadurch gekennzeichnet, dass** das Zentralrad des zweiten Planetengetriebezugs (46) mit dem Rotor der zweiten Elektromaschine (42) verbunden ist.

16. Getriebe nach Anspruch 13, **dadurch gekennzeichnet, dass** der Satellitenträger des dritten Planetengetriebezugs (47) durch Aktivierung des Betriebsartänderungssystems an dem Gehäuse (50) über eine zwischen dem Gehäuse (50) und dem Satellitenträger (ps) des dritten Planetengetriebezugs (47) angeordnete Bremse (48) unbeweglich gemacht wird.

17. Getriebe nach Anspruch 16, **dadurch gekennzeichnet, dass** der Satellitenträger (ps) des dritten Planetengetriebezugs (47) mit seinem Zentralrad (p) über eine durch das Betriebsartänderungssystem gesteuerte Kupplung (49) verbunden ist.

18. Getriebe nach einem der Ansprüche 11 bis 17, **dadurch gekennzeichnet, dass** der zweite und der dritte Planetengetriebezug ein gemeinsames Hohlrad (75) enthalten, dass sich der Satellitenträger (74) des dritten Planetengetriebezugs (47) um die Welle seines Zentralrads (76) frei dreht, wobei die Welle mit dem Wellenträger des Hohlrades des ersten Planetengetriebezugs (45) verbunden ist, dass sich der Satellitenträger des zweiten Planetengetriebezugs (46) um die Welle seines Zentralrades (79) frei dreht, wobei diese Welle mit der Welle des Rotors der zweiten Elektromaschine (42) verbunden ist, und dass sich der Satellitenträger (68) des ersten Planetengetriebezugs (45) um die Welle (60) seines Zentralrades frei dreht, wobei die Welle (60) mit ihren beiden Enden mit der Motorwelle der Brennkraftmaschine (41) bzw. mit dem Zentralrad fest verbunden ist.

19. Getriebe nach Anspruch 18, **dadurch gekennzeichnet, dass** die erste Elektromaschine (44) außerhalb der gemeinsamen Achse der Brennkraftmaschine (41) und des ersten Planetengetriebezugs (45), des zweiten Planetengetriebezugs (46) und des dritten Planetengetriebezugs (47) und der zweiten Elektromaschine (42) angeordnet ist, wobei die Welle des Rotors mit einem Ritzel (72) fest verbunden ist, das an einer Außenzahnung (71) des Hohlrades des ersten Planetengetriebezugs (45) in Eingriff ist.

20. Getriebe nach Anspruch 17, **dadurch gekennzeichnet, dass** es eine Steuereinheit (80) für seinen Betrieb aufweist, die enthält:
- eine Steuereinheit (81) des Betriebspunkts der Triebwerksgruppe in Abhängigkeit von vorgegebenen Beschränkungen;
- eine Steuereinheit (82) des Betriebspunkts der Brennkraftmaschine (41), die einen Soll-Betriebspunkt der Steuereinheit (81) empfängt und Steuersignale erzeugt, die für Aktoren für die Bestimmung des Betriebspunkts der Brennkraftmaschine (41) geeignet sind;
- eine Steuereinheit (83) für den Betrieb der ersten Elektromaschine (44) und der zweiten Elektromaschine (42), derart, dass für jede Maschine ihre Motor- oder Generatorbetriebsart, ihre Drehzahl und/oder ihr Drehmoment oder aber ihre induzierte Spannung und/oder ihr induzierter Strom, insbesondere in Bezug auf ein Steuerorgan eines Akkumulators für elektrische Energie, bestimmt werden, wobei die Steuereinheit (83) einen Soll-Betriebspunkt der Steuereinheit (81) empfängt und Steuersignale erzeugt, die für Steuerschaltungen der Elektromaschinen geeignet sind; und
- eine Steuereinheit (84) für die Änderung der Betriebsart des Getriebes, die den deaktivierten oder aktivierten Zustand der Kupplung (49) und/oder der Bremse (48) bestimmt, derart, dass eine Betriebsart unter wenigstens zwei Betriebsarten des stufenlos verstellbaren Getriebes unter der Steuerung der Steuereinheit (81) gewählt wird.

21. Stufenlos verstellbares Getriebe mit Kraftableitung in zwei Betriebsarten, dessen konstitutive Elemente zwischen zwei Kraftwegen, die die Brennkraftmaschine (230) mit den Rädern (233) des Fahrzeugs parallel verbinden und einen Hauptkraftweg sowie einen sekundären Kraftweg, der ein Betriebsartänderungssystem enthält, bilden, verteilt sind, wobei diese Elemente zwei Planetengetriebezüge (TB, TC), zwei Elektromaschinen (231, 232), eine Untersetzungsstufe (239) und Steuermittel, die die Kraft zwischen den beiden Kraftwegen entsprechend der Betriebsart des Getriebes unterschiedlich verteilen, enthalten, **dadurch gekennzeichnet, dass** es einen ersten zusammengesetzten Planetengetriebezug (TA), der ermöglicht, die Brennkraftmaschine (230) mit den Rädern des Fahrzeugs (233) über den Haupt-Kraftableitungsweg zu verbinden, und einen einfachen Planetengetriebezug (TB), der ermöglicht, die Kraftableitung zu verwirklichen, sowie einen zweiten zusammengesetzten Planetengetriebezug (TC), um das System zum Ändern der Betriebsart zwischen wenigstens zwei Betriebsarten des stufenlos verstellbaren Getriebes zu verwirklichen, enthält.

22. Getriebe nach Anspruch 21, **dadurch gekennzeichnet, dass** der erste zusammengesetzte Zug (TA) einen ersten Planetengetriebezug (238), mit dem die Brennkraftmaschine (230) über dessen Zentralrad (P1) verbunden ist, enthält, wobei der Satellitenträger (ps) des ersten Planetengetriebezugs (238) mit einem Untersetzer (239) verbunden ist, dessen Ausgang mit den Antriebsrädern (233) des Fahrzeugs und mit dem Satellitenträger eines zweiten Planetengetriebezugs (237) des ersten zusammengesetzten Zugs (TA) verbunden ist, wobei die Hohlräder des ersten Planetengetriebezugs (238) und des zweiten Planetengetriebezugs (237) miteinander verbunden sind und ihre gemeinsame Bewegung an eine Kopplung in dem sekundären Kraftableitungsweg übertragen wird.

23. Getriebe nach Anspruch 22, **dadurch gekennzeichnet, dass** das Zentralrad (P2) des zweiten Planetengetriebezugs (237) des ersten zusammengesetzten Zugs (TA) selbst mit dem Satellitenträger (ps) des einfachen Planetengetriebezugs (TB) verbunden ist, dessen Zentralrad (p) mit der Drehwelle der zweiten Elektromaschine (232) verbunden ist, wobei die erste Elektromaschine (231) des elektrischen Variators des Getriebes über seine Ausgangswelle mit einem Untersetzer (240) gekoppelt ist, der zugleich mit den Hohlrädern des ersten Planetengetriebezugs (238) und des zweiten Planetengetriebezugs (237) des ersten zusammengesetzten Zugs (TA) sowie mit dem Hohlrad eines ersten Planetengetriebezugs (231') des zweiten zusammengesetzten Zugs (TC) verbunden ist, der außerdem einen zweiten Planetengetriebezug (236) enthält und der so konfiguriert ist, dass die Satellitenträger und die Zentralräder der beiden Planetengetriebezüge (231', 236) miteinander gekoppelt sind, dass die Satellitenträger (ps) des zweiten zusammengesetzten Zugs (TC) vorübergehend mit einem Rahmen oder Chassis (245) über eine erste Bremse (244) fest verbunden sind, während das Hohlrad (C) des zweiten Planetengetriebezugs (236) des zweiten zusammengesetzten Zugs (TC) mit dem Chassis oder einem festen Punkt (245) über eine zweite Bremse (244') fest verbunden sein kann, und dass die Zentralräder der Planetengetriebezüge (231', 236) des zweiten zusammengesetzten Zugs (TC) mit dem Hohlrad des einfachen Planetengetriebezugs (TB) verbunden sind.

24. Getriebe nach einem der Ansprüche 22 oder 23, **dadurch gekennzeichnet, dass** die Ausgangswelle (250) der Brennkraftmaschine (230) auf die gemeinsame Drehwelle (251) des zusammengesetzten Hauptzugs (TA), des zusammengesetzten Betriebsartänderungszugs (TC) sowie des einfachen Zugs (TB) für den Aufbau der zwei Ableitungswege ausgerichtet ist,
dass die Brennkraftmaschine (230) direkt ohne Zwischenuntersetzer über diese Welle (250) mit dem Zentralrad (PA₁) des ersten Planetengetriebezugs (238, Fig. 7) des ersten zusammengesetzten Zugs (TA) verbunden ist, wobei der Satellitenträger (PS_{A}) doppelt vorhanden ist und den beiden Planetengetriebezügen (237, 238) des ersten zusammengesetzten Zugs (TA) gemeinsam ist, wobei der Satellitenträger (PS_{A}) am Zentralrad (PA₁) des ersten Planetengetriebezugs (238, Fig. 7) drehbar und am Wellenende (250) der Brennkraftmaschine (230) befestigt ist und am Zentralrad (PA₂) des zweiten Planetengetriebezugs (237, Fig. 7) des ersten zusammengesetzten Zugs (TA), das an einem ersten Teil der gemeinsamen Welle (251) befestigt ist, dessen zweiter Teil auf die Ausgangswelle (250) der Brennkraftmaschine (230) ausgerichtet ist und den Satellitenträger (PS_{B}) des einfachen Zugs (TB) trägt, drehbar ist, wobei die gemeinsame Welle (251) an zwei Lagern frei drehbar folgendes trägt:
- das Hohlrad (CA), das den beiden Planetengetriebezügen (238, 237) des ersten zusammengesetzten Zugs (TA) gemeinsam ist, und das Hohlrad (CC1) des ersten Planetengetriebezugs (231') des zweiten zusammengesetzten Zugs (TC);
- das Zentralrad (PC) des zweiten zusammengesetzten Zugs (TC), das mit dem Hohlrad (CB) des einfachen Zugs (TB) fest verbunden ist.

25. Getriebe nach Anspruch 24, **dadurch gekennzeichnet, dass** das Hohlrad (CA) der zwei Planetengetriebezüge (238, 237) des ersten zusammengesetzten Zugs (TA) eine einzige Zahnung enthält, um in ein einzelnes Ritzel des Satelliten (SA) einzugreifen, das an dem Satellitenträger (PS_{A}) angebracht ist, wobei jeder Satellit (SA) des Satellitenträgers (PS_{A}) doppelt vorhanden ist, d. h., dass er folgendes trägt:
- ein erstes Ritzel, das zwischen dem Zentralrad (PA₁) des ersten Planetengetriebezugs (238) und der einzigen, hier der inneren Zahnung des Hohlrades (CA), das den beiden Planetengetriebezügen gemeinsam ist, in Eingriff ist;
- ein zweites Ritzel, das mit dem ersten Ritzel über ihre gemeinsame Achse fest verbunden ist und an dem Zentralrad (PA₂) des zweiten Planetengetriebezugs (237) des ersten zusammengesetzten Zugs (TA) in Eingriff ist; und
dass der Satellitenträger (PS_{A}) des ersten zusammengesetzten Zugs (TA) an einem Lager frei drehbar angebracht ist, das zweckmäßig an der Ausgangswelle (250) der Brennkraftmaschine (230) angeordnet ist und mit einem Zahnrad, das an dem mit den Rädern des Fahrzeugs (233) fest verbundenen Ritzel in Eingriff ist, fest verbunden ist.

26. Getriebe nach Anspruch 25, **dadurch gekennzeichnet, dass** das Hohlrad (CA), das den beiden Planetengetriebezügen (237, 238) gemeinsam ist, außerdem eine Außenzahnung trägt, die mit einem Ritzel (253) in Eingriff ist, das am Ende der Rotorwelle der ersten Elektromaschine (231) des elektrischen Variators angebracht ist.

27. Getriebe nach Anspruch 26, **dadurch gekennzeichnet, dass** das Zentralrad (PC), das den beiden Planetengetriebezügen (231', 236) des zweiten zusammengesetzten Zugs (TC) gemeinsam ist, eine einzige Außenzahnung enthält, um mit einem einzigen Ritzel des Satelliten (SC), der an dem Satellitenträger (PS) des zweiten zusammengesetzten Zugs (TC) angebracht ist, in Eingriff ist, wobei jeder Satellit (SC) des Satellitenträgers (PS_{C}) doppelt vorhanden ist, d. h., dass er folgendes trägt:
- ein erstes Ritzel, das an dem Zentralrad (PC) einerseits und an einer Innenzahnung des Hohlrades (CC1) des Planetengetriebezugs (231'), das mit dem gemeinsamen Hohlrad (CA) des ersten zusammengesetzten Zugs (TA) fest verbunden ist, in Eingriff ist,
- ein zweites Ritzel, das mit dem ersten Ritzel über deren gemeinsame Achse fest verbunden ist und an einer Innenzahnung des Hohlrades (CC2) des zweiten Planetengetriebezugs (236) des zweiten zusammengesetzten Zugs (TC) in Eingriff ist;
und dass der Satellitenträger (PS_{C}) des zweiten zusammengesetzten Zugs (TC) zwischen dem Zentralrad (PC) und dem Hohlrad (CC1) seines ersten Planetengetriebezugs (231') frei drehbar angebracht ist.

28. Getriebe nach Anspruch 27, **dadurch gekennzeichnet, dass** die gemeinsame Welle (251) den Satellitenträger (PS_{B}) des einfachen Zugs (TB), der sich am Zentralrad (PB) dreht, dessen Welle (251), die auf die gemeinsame Welle (251) und die Ausgangswelle (250) der Brennkraftmaschine (230) ausgerichtet ist, mit dem Rotor der zweiten Elektromaschine (232) verbunden ist, dreht.

29. Getriebe nach Anspruch 28, **dadurch gekennzeichnet, dass** das Betriebsartänderungssystem enthält:
- eine zweite Bremse (244'), die einen ersten Belag, der mit dem Hohlrad (CC2) des zweiten Planetengetriebezugs (236) des zweiten zusammengesetzten Zugs (TC) fest verbunden ist, und einen zweiten Belag, der mit dem Gehäuse (245) des Wechselgetriebes fest verbunden ist, enthält, wobei ein Bremsaktor zwischen den beiden Belägen in der Weise angeordnet ist, dass unter der Steuerung einer Steuereinheit (249) für die Änderung der Betriebsarten des Getriebes die zweite Bremse (244') entweder geöffnet oder zusammengepresst wird;
- eine erste Bremse (244), die einen ersten Belag, der mit dem Satellitenträger (PS_{C}) des zweiten zusammengesetzten Zugs (TC) fest verbunden ist, und einen zweiten Belag, der mit dem Gehäuse (245) des Wechselgetriebes fest verbunden ist, enthält, wobei ein Bremsaktor zwischen den beiden Belägen in der Weise angeordnet ist, dass unter der Steuerung der Steuereinheit (249) zur Änderung der Betriebsart des Getriebes die erste Bremse (244) deaktiviert oder aktiviert wird.

30. Getriebe nach einem der Ansprüche 23 oder 29, **dadurch gekennzeichnet, dass** es eine Steuereinheit (235) für seine Funktion enthält, die über einen Bus (B) mit verschiedenen Sensoren für den Betriebszustand des Fahrzeugs sowie mit Sensoren zum Erfassen der Absicht des Fahrers und mit mehreren Steuereinheiten verbunden ist, die enthalten:
- eine Steuereinheit (246) des Betriebspunkts der Triebwerksgruppe in Abhängigkeit von vorgegebenen Beschränkungen;
- eine Steuereinheit (247) des Betriebspunkts der Brennkraftmaschine (230), die einen Soll-Betriebspunkt der Steuereinheit (235) für den Betrieb empfängt und Steuersignale erzeugt, die für Aktoren zum Bestimmen des Betriebspunkts der Brennkraftmaschine (230) geeignet sind;
- eine Steuereinheit (248) für den Betrieb der ersten Elektromaschine (231) und der zweiten Elektromaschine (232), derart, dass für jede Maschine ihre Motor- oder Generatorbetriebsart, ihre Drehzahl und/oder ihr Drehmoment oder aber ihre induzierte Spannung und/oder ihr induzierter Strom, insbesondere in Bezug auf ein Steuerorgan eines Akkumulators für elektrische Energie, bestimmt werden, wobei die Steuereinheit (248) einen Soll-Betriebspunkt der Steuereinheit (235) für den Betrieb empfängt und Steuersignale erzeugt, die für Steuerschaltungen der Elektromaschinen geeignet sind, um ihre jeweiligen Betriebspunkte gemäß einem Strom-Spannungs-Gesetz I mit vier Quadranten zu bestimmen;
- eine Steuereinheit (249) zum Ändern der Betriebsart des Getriebes, die den deaktivierten oder aktivierten Zustand der ersten Bremse (244) und/oder der zweiten Bremse (244') bestimmt, derart, dass eine Betriebsart unter wenigstens drei Betriebsarten des stufenlos verstellbaren Getriebes unter der Steuerung der Betriebssteuereinheit (235) ausgewählt wird, wovon:
- in der ersten Betriebsart die Bremse (244) den Satellitenträger (PS) der zwei Planetengetriebezüge (231', 236) des zweiten zusammengesetzten Zugs (TC) blockiert, das Hohlrad (C) des zweiten Planetengetriebezugs (236) sich frei dreht und der Zug (TC) als ein einfacher Zug wirkt, der aus dem Hohlrad des ersten Planetengetriebezugs (231'), dem gemeinsamen Planetenträger (PS) und dem gemeinsamen Zentralrad (P) zusammengesetzt ist;
- in einer zweiten Betriebsart das Betriebsartänderungssystem in einen Zustand versetzt wird, derart, dass die zwei Bremsen (244, 244') aktiviert sind, wobei sämtliche Elemente des zusammengesetzten Zugs (TC) blockiert sind, derart, dass die zwei Elektromaschinen (231, 232) direkt mit dem Haupt-Kraftableitungsweg verbunden sind, wobei der eine oder der andere oder der eine und der andere von ihnen sowohl als Generator als auch als Motor arbeiten können; und
- in einer dritten Betriebsart die erste Bremse (244) deaktiviert ist und die zweite Bremse (244') aktiviert ist, derart, dass das Hohlrad (C) des zweiten Planetengetriebezugs (236) gebremst wird und als Abstützpunkt dient.
